# EUROPÄISCHE PATENTSCHRIFT

(11) **EP 2 265 436 B1**
(45) Veröffentlichungstag und Bekanntmachung des Hinweises auf die Patenterteilung: **02.12.2015**
(21) Anmeldenummer: 09715072.6
(22) Anmeldetag: 27.02.2009
(51) Int. Cl.: B29C 70/52, B29L 31/00

(54) **VERFAHREN ZUR HERSTELLUNG EINES PROFILIERTEN PREFORMS ODER EINES PROFILIERTEN FVK-BAUTEILS**
METHOD FOR THE PRODUCTION OF A PROFILED PREFORM OR A PROFILED FIBER COMPOSITE-PLASTIC COMPONENT
PROCÉDÉ DE PRODUCTION D'UNE PRÉFORME PROFILÉE OU D'UN COMPOSANT PROFILÉ EN MATIÈRE PLASTIQUE RENFORCÉE PAR DES FIBRES

(30) Priorität: 27.02.2008 US 31754 P; 27.02.2008 DE 102008011410
(43) Veröffentlichungstag der Anmeldung: 29.12.2010
(73) Patentinhaber: Airbus Operations GmbH, 21129 Hamburg (DE)
(72) Erfinder: NITSCH, Christian, 28865 Lilienthal (DE)
(74) Vertreter: UEXKÜLL & STOLBERG
(86) Internationale Anmeldenummer: PCT/EP2009/001412
(87) Internationale Veröffentlichungsnummer: WO 2009/106341

(56) Entgegenhaltungen:
- EP-A- 1 116 575
- EP-A2- 0 170 109
- EP-A2- 0 315 770
- WO-A-2007/119371
- WO-A-2008/019894
- JP-A- 2005 324 513
- US-A- 5 043 128
- F. C. CAMPBELL: "Manufacturing processes for advanced composites" 2004, ELSEVIER , OXFORD, UK , XP002526495 ISBN: 1856174158 Seite 329 - Seite 330

## Beschreibung

Die Erfindung betrifft ein Verfahren zur Herstellung eines profilierten Preforms, und eines profilierten FVK-Bauteils.

Die Erfindung betrifft insbesondere ein Pultrusionsverfahren zur Herstellung eines profilierten Preforms mit zueinander winklig verlaufenden Querschnittsabschnitten aus einer Mehrzahl von Halbzeugen in einem quasi-kontinuierlichen Prozess sowie ein Pultrusionsverfahren zur Herstellung eines profilierten FVK-Bauteils mit zueinander winklig verlaufenden Querschnittsabschnitten aus einer Mehrzahl von Halbzeugen in einem quasi-kontinuierlichen Prozess.

Weiterhin wird offenbart eine Pultrusionsanlage zur Herstellung eines profilierten Preforms oder Faserverbund-Kunststoff(FVK)-Bauteils mit zueinander winklig verlaufenden Querschnittsabschnitten aus einer Mehrzahl von Halbzeugen sowie eine Press-Vorrichtung zum Pressen einer Halbzeug-Anordnung mit einem zueinander winklig verlaufenden Querschnittsabschnitten.

Die DE 4017978 A1 beschreibt eine Vorrichtung zur Herstellung von profilierten Teilen (Profilen PR) aus Thermoplast-Halbzeugen mit einer zwei- oder mehrteiligen Formpresse, deren Teile eine Heizzone (HZ), eine Presszone (PZ) und eine Kühlzone (KZ) bilden, wobei sich die Form des von den Teilen der Formpresse gebildeten Spalts vom Ausgangsprofil (rechteckiger Querschnitt) stetig zum gewünschten Profil (PR) ändert.

DE 19754381 A1 offenbart ein Verfahren zum Herstellen eines Profilteils, insbesondere ein Pultrusionsverfahren, bei dem fortlaufend eine Mehrzahl von Fasern und/oder eine oder mehrere Gewebebahnen mit einem flüssigen Kunststoff benetzt und entsprechend dem Profilteil geformt werden, wobei die Fasern und/oder die Gewebebahnen und/oder der flüssige Kunststoff einer Vibration ausgesetzt werden, um Lunker oder Fehlstellen in den Fasern und/oder den Gewebebahnen und/der in den Zwischenräumen aufzulösen. Die Gewebebahnen werden von Rollen oder dergleichen abgewickelt und einer Verbindungsvorrichtung zugeführt. Dieser Verbindungsvorrichtung werden auch die Fasern über weitere Führungsvorrichtungen zugeführt. Mit Hilfe der Verbindungsvorrichtung werden die Fasern und die Gewebebahnen zueinander gebracht und miteinander verknüpft. Der Verbindungsvorrichtung ist ein Werkzeug nachgeordnet, dem die verbundenen Fasern und Gewebebahnen zugeführt werden. Bei dem Werkzeug kann es sich beispielsweise um einen Formkern oder dergleichen handeln. Mit Hilfe des Werkzeugs werden die Fasern zusammen mit den Gewebebahnen geformt. Insbesondere werden die Fasern und die Gewebebahnen gefaltet. Das Werkzeug ist derart ausgestaltet, dass sich nach der Umformung der Fasern und Gewebebahnen die erwünschte Form des Profilteils ergibt.

Die WO 2007/107007 offenbart eine Pultrusionsvorrichtung, die drei thermisch voneinander isolierte thermische Zonen aufweist, mit denen ein vorgegebenes Temperaturprofil realisiert wird, um ein Halbzeug, das durch die Pultrusionsvorrichtung geführt wird, zu verformen und anschließend zu härten.

Aus der DE 601 18 048 T2 ist eine Vorrichtung zum kontinuierlichen Fomen eines H-förmigen faserverstärkten Elements bekannt. Diese umfasst eine Vorrichtung zur Montage einer Anzahl von Spulen, auf welche streifenförmiges vorimprägniertes Material aufgespult ist, das hergestellt wird durch Imprägnieren von wärmehärtendem Harz in Kohlefasern oder Glasfasern oder dergleichen. Eine Vorrichtung zum Formen des vorimprägnierten Materials in eine vorbestimmte H-Form, eine Pressvorrichtung zum Pressen des vorimprägnierten Elements von vier Seiten her, einen Heizofen zum Nachhärten des vorimprägnierten Elements und eine Schneidvorrichtung zum Schneiden des ausgehärteten Produktes in vorbestimmte Längen. Bei der Verwendung von Prepreg-Halbzeugen ist mit diesen ein bestimmter Harzgehalt vorgegeben. Weiterhin ist bei der Herstellung eines Bauteils mit abschnittsweise oder insgesamt verhältnismäßig großen Bauteildicken eine Anzahl von Prepregs notwendig, die beim Formen des vor-imprägnierten Materials in eine vorbestimmte H-Form nur eingeschränkt bearbeitbar ist. Insbesondere kann in solchen Fällen ein Faltenwurf an den Krümmungsbereichen der in die H-Form umgeformten Halbzeug-Anordnung entstehen. Bei bestimmten vorzusehenden Bauteildicken kann ein gewünschtes Umformen der Prepreg-Anordnung überhaupt nicht durchführbar sein. Generell können bei Umformen der Prepreg-Anordnung Faser-Verwerfungen und/oder Faser-Ondulationen auftreten. Die genannten Probleme bei der Verwendung von Prepregs in dem verfahren nach der DE 601 18 048 T2 führen zu Verringerung der Bauteil-Qualität.

Aus der EP 1 621 323 A1 ist ein zweistufiger Herstellungsprozess zur Herstellung eines Kunststoff-Bauteils bekannt, bei dem zunächst ein Vorformling aus einzelnen Fasern und einem hergestellt wird, der in einem zweiten Schritt und in einer eigens dafür vorgesehenen Anlage durch ein Harz-Injektionsverfahren mit Harz getränkt und gehärtet wird. Bei dem Harz-Injektionsverfahren ist die Menge des in den Vorformling injizierten Harzes nicht genau kontrollierbar, so dass bei diesem Verfahren Bauteils mit hoher Qualität nicht herstellbar oder nur schwierig herstellbar ist.

Aus der DE 698 14 129 T2 ist ein Verfahren zur Herstellung eines Kunststoff-Bauteils bekannt, bei dem ein Vorformling aus einzelnen uni-direktionalen Fasern und Prepreg-Gittern hergestellt wird, der anschließend in einem Injektionsverfahren mit Harz getränkt und gehärtet wird. Auch in diesem Fall ist die Menge des jeweils injizierten Harzes nicht genau kontrollierbar und insbesondere nicht abschnittsweise einstellbar. Dadurch kann eine hohe Bauteil-Qualität mit diesem Verfahren nicht erreicht werden. Hinzu kommt, dass der genannte Kontrollaufwand besteht. Darüber hinaus ist die Injektionsphase insbesondere bei verhältnismäßig großen Vorformlingen bzw. Bauteilen zeitaufwendig.

In der WO 2007/119371 A1 ist ein Verfahren für die Herstellung von Preforms offenbart. Bei dem in diesem Dokument beschriebenen Verfahren werden mit Harz vorbehandelte Halbzeuge verformt und miteinander verpresst. Die Verformung der halbzeuge erfolgt dabei teilweise in einer Verformungsvorrichtung und teilweise auf dem Transportweg der Halbzeuge zwischen der Verformungsvorrichtung und einem Presswerkzeug.

Aufgabe der Erfindung ist es, ein Verfahren zur Herstellung eines profilierten Preforms, und eines profilierten FVK-Bauteils bereit zu stellen, mit dem bzw. mit der jeweils ein Preform oder ein FVK-Bauteil mit zueinander winklig verlaufenden Querschnittsabschnitten effizient und mit optimierter Qualität hergestellt werden kann.

Diese Aufgabe wird erfindungsgemäß mit den Merkmalen des unabhängigen Anspruchs 1 gelöst. Weitere Ausführungsformen sind in den auf diesen rückbezogenen Unteransprüchen angegeben.

Bei dem erfindungsgemäßen Verfahren wird als Ausgangsmaterial eine Mehrzahl von Halbzeugen verwendet und in einem quasi-kontinuierlichen Prozess verarbeitet. Unter" quasi-kontinuierlicher Prozess" soll in diesem Zusammenhang ein Herstellungsverfahren verstanden werden, bei dem zwar die Vorschubbewegung des Halbzeugs in Zeitabschnitten gestoppt wird, insbesondere um einen Press-Vorgang auszuführen, bei der der Preform bzw. das FVK-Bauteil erst nach dem Schneidvorgang der Anlage entnommen wird, so dass das Verfahren in dieser Hinsicht auch als "kontinuierlich" angesehen werden kann.

Bei den erfindungsgemäßen Pultrusionsverfahren werden als Ausgangsmaterial insbesondere ebene Halbzeuge verwendet, die somit insbesondere auf Rollen aufgewickelt werden können. In die erfindungsgemäß vorgesehene Dispenser-Vorrichtung werden derartige Rollen eingesetzt.Dabei wird eine mehrschichtige Halbzeug-Anordnung von einer Dispenser-Vorrichtung abgegeben und der Verformungs-Vorrichtung zugeführt, die eine Kombination aus mehreren Bahnen von Verstärkungsfaser-Halbzeuglagen und zumindest einem Harzfilm ist, wobei die Halbzeug-Anordnung ein Binderharz mit einem Anteil von maximal 15 % am Gesamtgewicht der in der Halbzeug- Anordnung verwendeten Verstärkungsfaser-Halbzeuglagen als Bindermaterial zur Fixierung der Verstärkungsfaser-Halbzeuglagen derselben aufweist und wobei zumindest zwischen zwei Verstärkungsfaser-Halbzeuglagen zumindest ein Harzfilm gelegen ist.

Die der Verformungs-Vorrichtung zugeführten Verstärkungsfaser-Halbzeuglagen können zumindest teilweise aus Gewebelagen von Verstärkungsfasern gebildet sein.

Alternativ oder zusätzlich kann bei dem erfindungsgemäßen Pultrusionsverfahren vorgesehen sein, dass die Verstärkungsfaser-Halbzeuglagen zumindest teilweise aus Gelegen von Verstärkungsfasern gebildet sind.

Der mit einem erfindungsgemäßen Pultrusionsverfahren hergestellte profilierte Preform kann mit der Durchführung weiterer Verfahrenssschritte zu einem fertigen FVK-Bauteil oder einem FVK-Bauteil, das ein Zwischenprodukt ist, ausgebildet werden. Nach einem weiteren erfindungsgemäßen Pultrusionsverfahren wird ein profiliertes FVK-Bauteil mit zueinander winklig verlaufenden Querschnittsabschnitten hergestellt. Das jeweilige FVK-Bauteil kann ein fertiges FVK-Bauteil sein, das mit anderen Bauteilen zusammen gesetzt wird oder das Halbzeug kann ein Zwischenprodukt sein, das einem weiteren Verfahrensschritt, z.B. einem weiteren Umformen oder einem Nachhärte-Prozess zugeführt wird. Auch können auf das FVK-Bauteil Verstärkungslagen aufgebracht werden und kann das FVK-Bauteil anschließend einem Härteprozess unterzogen werden.

Bei den erfindungsgemäßen Pultrusionsverfahren oder bei der erfindungsgemäßen Pultrusionsanlage kann der hergestellte Preform bzw. das hergestellte Bauteil insbesondere in seiner Längsrichtung gekrümmt sein.

Bei diesem Pultrusionsverfahren werden bei dem Pressen in der Press-Vorrichtung in einem ersten Schritt die Werkzeugteile in eine erste Pressposition gefahren und in dieser Pressposition eine vorbestimmte Zeit gehalten und in einem zweiten Schritt zur Durchführung eines anschließenden Nachpressens der vorgepressten Halbzeug-Anordnung die Werkzeugteile in eine zweite Pressposition zueinander gefahren, bei der zumindest zwei Werkzeugteile näher zusammengefahren sind, als bei der ersten Pressposition.

Das Harzmaterial kann ein Binder sein, so dass der durch das Erwärmen in der Press-Vorrichtung entstehende Preform ein Faserhalbzeug-Preform ist. Dabei kann der Binder aus einem Duroplast-Werkstoff und/oder einem Thermoplast-Werkstoff gebildet sein. Der Binder kann als ein puderförmiges Material zwischen die Gelege eingebracht werden. Der Duroplast-Werkstoff kann insbesondere ein Epoxidharz sein.

Bei der Verwendung von Binder als Harzmaterial kann vorgesehen sein, dass nach der Entnahme des Faserhalbzeug-Preforms aus der Pultrusionsvorrichtung der Faserhalbzeug-Preform derart weiter bearbeitet wird, dass diesem in einem Harzinfusions-Verfahren Harz zugeführt wird und der Preform anschließend gehärtet wird.

Bei dem Pultrusionsverfahren kann vorgesehen sein, dass das Harzmaterial ein Harzfilm ist, so dass der durch das Erwärmen in der Press-Vorrichtung entstehende Preform ein Faserverbundkunststoff(FVK)-Preform ist.

Das Hindurchführen der der Verformungs-Vorrichtung zugeführten Halbzeug-Anordnung kann durch an dieser anliegende Transportrollen erfolgen, deren Orientierungen sich in der Längsrichtung der Verformungs-Vorrichtung gesehen von einer Lage im Eingangsbereich stetig in eine Lage im Ausgangsbereich der Verformungs-Vorrichtung ändern, die Lage zumindest eines Querschnittsabschnitts der Halbzeug-Anordnung stetig in eine Soll-Winkelstellung geändert wird.

Alternativ kann das Hindurchführen der der Verformungs-Vorrichtung zugeführten Halbzeug-Anordnung durch einen Verformungskanal mit an dieser anliegenden sich in Längsrichtung der Verformungs-Vorrichtung gesehen kontinuierlich verändernde Verformungskonturen erfolgen, wobei die Lage zumindest eines Querschnittsabschnitts der Halbzeug-Anordnung stetig in eine Soll-Winkelstellung geändert wird.

Bei dem Pressen in der Press-Vorrichtung kann vorgesehen sein, dass in einem ersten Schritt die Werkzeugteile in eine erste Pressposition gefahren und in dieser Pressposition eine yorbestimmte Zeit gehalten werden und dass in einem zweiten Schritt zur Durchführung eines anschließenden Nachpressens der vorgepressten Halbzeug-Anordnung die Werkzeugteile in eine zweite Pressposition zueinander gefahren werden, bei der zumindest zwei Werkzeugteile näher zusammengefahren sind, als bei der ersten Pressposition.

Bei den genannten Pultrusionsverfahren sowohl mit der Verwendung von Binder als auch von Harzfilm als Harzmaterial kann vorgesehen sein, dass nach der Entnahme des Preforms aus der Pultrusionsvorrichtung der Preform derart weiterbearbeitet wird, dass der Preform einem Verformungsprozess unterzogen und anschließend gehärtet wird.

Auch kann auf den Preform lokal Verstärkungslagen aus Prepreg aufgelegt werden und anschließend die Kombination des Preforms mit den Verstärkungslagen gehärtet werden. Alternativ kann vorgesehen sein, dass auf den Preform lokal Verstärkungslagen von trockenen Gelegen aufgelegt werden und anschließend die Kombination des Preforms mit den Verstärkungslagen und dem Harzfilm gehärtet wird, wobei zwischen dem Preform und dem nächsten daran angeordneten Gelege ein Harzfilm gelegt wird.

Bei dem erfindungsgemäßen Pultrusionsverfahren zur Herstellung eines profilierten FVK-Bauteils kann vorgesehen sein, dass beim Hindurchführen der der Verformungs-Vorrichtung zugeführten Halbzeug-Anordnung durch an dieser anliegende Transportrollen, deren Orientierungen sich in der Längsrichtung der Verformungs-Vorrichtung gesehen von einer Lage im Eingangsbereich stetig in eine Lage im Ausgangsbereich der Verformungs-Vorrichtung ändern, die Lage zumindest eines Querschnittsabschnitts der Halbzeug-Anordnung stetig in eine Soll-Winkelstellung geändert wird. Alternativ zu dieser Ausführungsform kann bei dem erfindungsgemäßen Pultrusionsverfahren vorgesehen sein, dass beim Hindurchführen der der Verformungs-Vorrichtung zugeführten Halbzeug-Anordnung durch einen Verformungskanal mit an dieser anliegenden sich in Längsrichtung der VerformungsVorrichtung gesehen kontinuierlich verändernde Verformungskonturen, die Lage zumindest eines Querschnittsabschnitts der Halbzeug-Anordnung stetig in eine Soll-Winkelstellung geändert wird.

Bei dem Pultrusionsverfahren zur Herstellung eines profilierten FVK-Bauteils kann das Erwärmen in der Press-Vorrichtung derart durchgeführt werden, dass eine Vernetzung des Harzes des Harzfilms zu mindestens 40% erfolgt. Der gleichzeitige Press-Vorgang kann derart vorgesehen sein, dass bei dem Pressen in der Press-Vorrichtung in einem ersten Schritt die Werkzeugteile in eine erste Pressposition gefahren und in dieser Pressposition eine vorbestimmte Zeit gehalten werden und dass in einem zweiten Schritt zur Durchführung eines anschließenden Nachpressens der vorgepressten Halbzeug-Anordnung die Werkzeugteile in eine zweite Pressposition zueinander gefahren werden, bei der zumindest zwei Werkzeugteile näher zusammengefahren sind, als bei der ersten Pressposition.

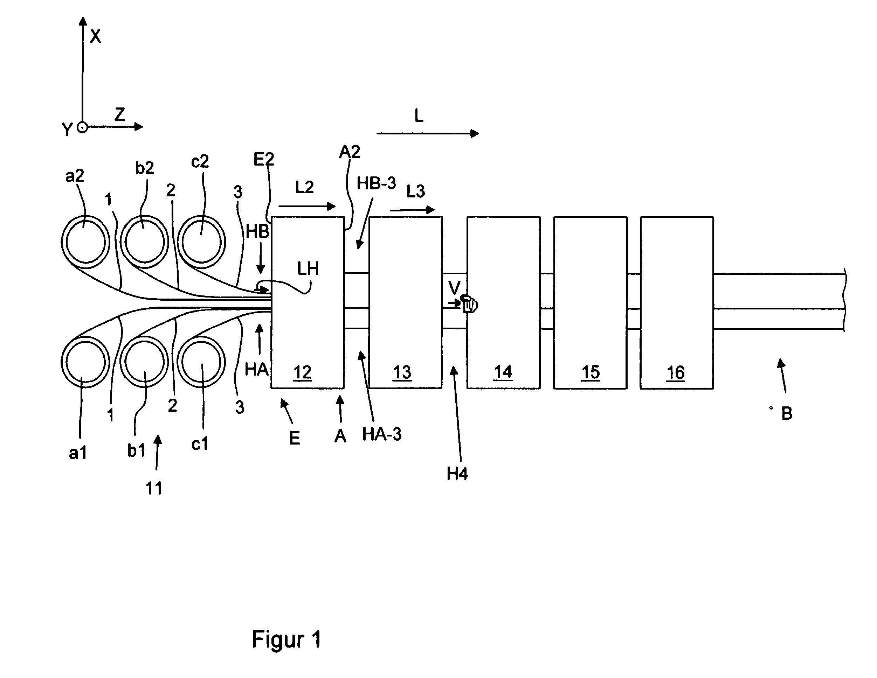

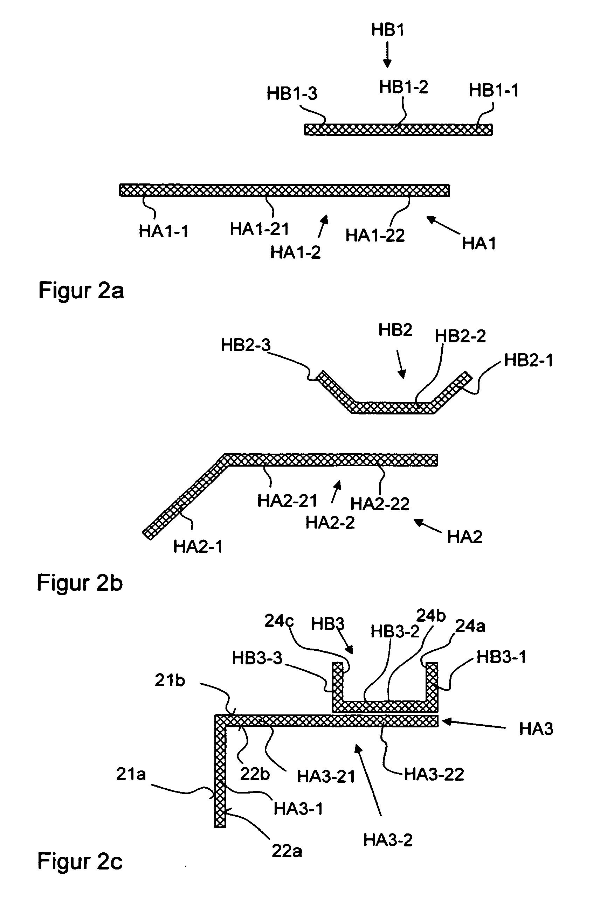

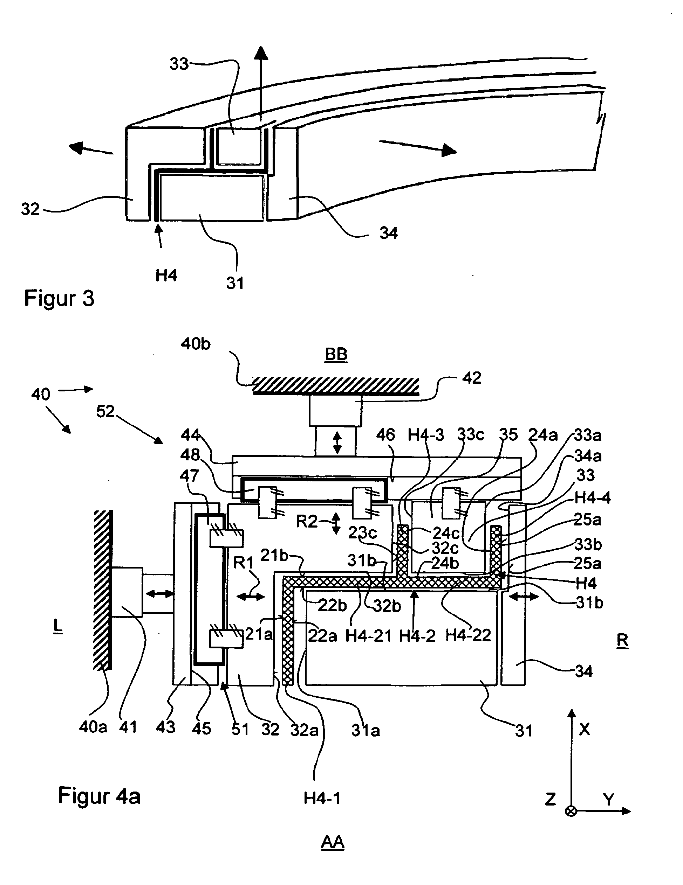

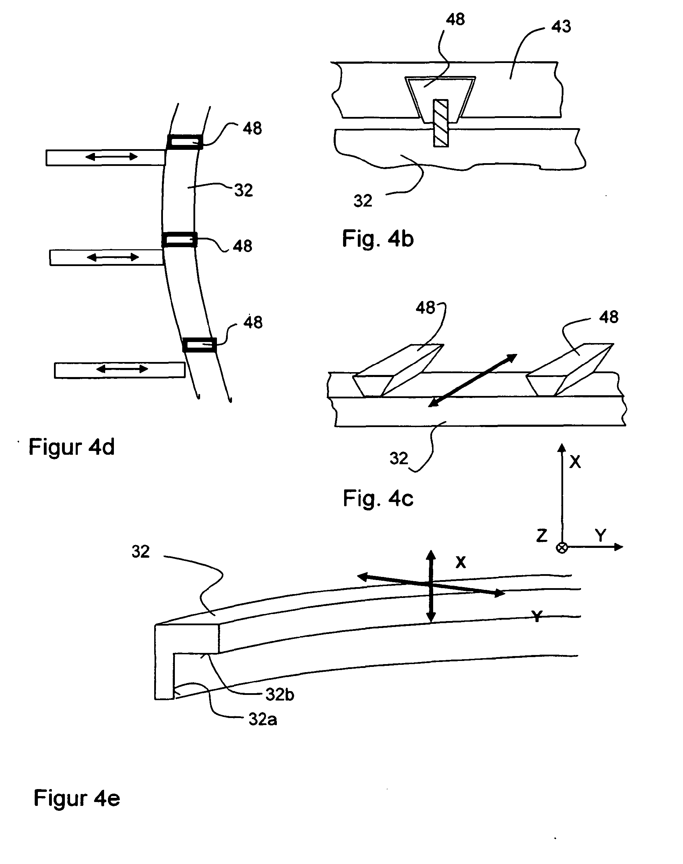

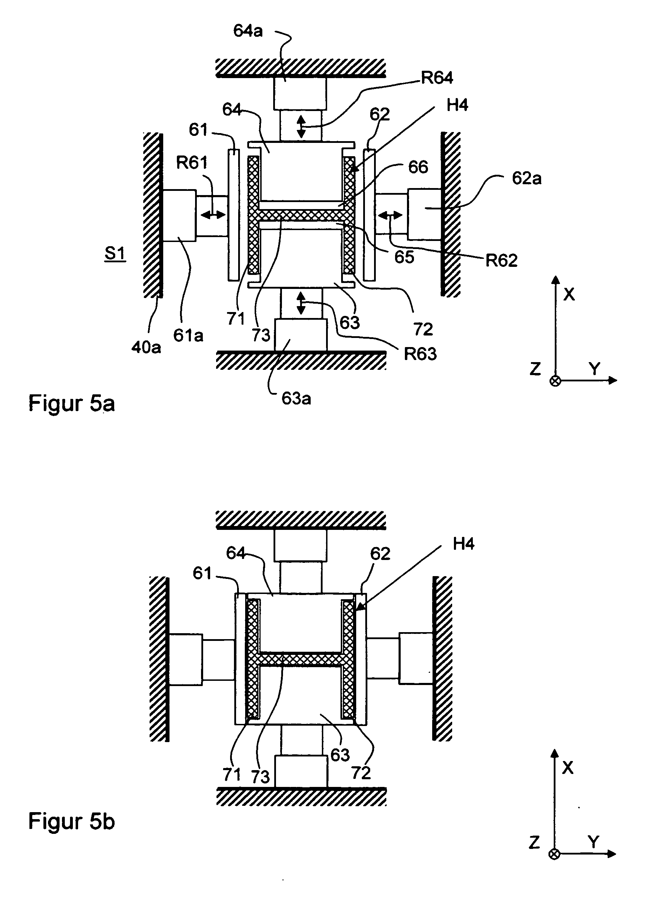

Im Folgenden werden Ausführungsbeispiele für Anlagen und Vorrichtungen an Hand der beiliegenden Figuren erläutert, die das Verständnis des erfindungsgemäßen Verfahrens erleichtern und die zeigen:
▪ Figur 1 eine schematische Darstellung einer Pultrusionsanlage zur Herstellung eines profiliertes FVK-Bauteils mit zueinander winklig verlaufenden Querschnittsabschnitten mit einer Dispenser-Vorrichtung, einer Verformungs-Vorrichtung, einem Press-Werkzeug, einer Zieh-Vorrichtung sowie einer Schneid-Vorrichtung, wobei in dem dargestellten Ausführungsbeispiel zur Herstellung des profilierten FVK-Bauteils der Verformungs-Vorrichtung zwei Halbzeug-Anordnungen zugeführt werden, die jeweils insbesondere aus zumindest zwei ebenen Verstärkungsfaser-Halbzeuglagen und zumindest einem zwischen diesen gelegenen Harzfilm gebildet sein können;
▪ Figuren 2a, 2b, 2c zur Darstellung der Verformung mehrerer Halbzeug-Anordnungen in einer Ausführungsform der Verformungs-Vorrichtung der Pultrusionsanlage nach der Figur 1 eine schematische Darstellung von drei verschiedenen Zuständen der Gestalt der zwei beispielsweise vorgesehenen Halbzeug-Anordnungen, die diese beim Durchlaufen durch die Verformungs-Vorichtung nacheinander einnehmen können, wobei die Halbzeuge in den ersten Phasen der Verformung in der Verformungsvorrichtung noch in einem Abstand zueinander in der Verformungs-Vorrichtung geführt werden (Figuren 2a, 2b) und die Halbzeuge im Ausgangsbereich der Verformungs-Vorrichtung zusammen geführt werden (Figur 2c);
▪ Figur 3 eine schematische perspektivische Darstellung einer Ausführungsform des Press-Werkzeugs der Pultrusionsanlage schräg von oben gesehen, wobei diese Ausführungsform sowohl bei dem erfindungsgemäßen Verfahren zur Herstellung eines profilierten Preforms aus mehreren VerstärkungsfaserHalbzeuglagen und insbesondere ebenen trockenen Gelegelagen und/oder Gewebelagen optional mit zwischen diesen jeweils eingebrachtem Bindermaterial als auch bei dem erfindungsgemäßen Verfahren zur Herstellung eines profilierten FVK-Bauteils aus zumindest zwei ebenen Verstärkungsfaser-Halbzeuglagen und zumindest einem zwischen diesen gelegenen Harzfilm verwendet werden kann;
▪ Figur 4a eine schematische Querschnittsdarstellung einer Ausführungsform der schematisch in der Figur 3 dargestellten Press-Vorrichtung mit einer Darstellung der Werkzeugteile, von Führungsvorrichtungen zur Bewegung eines Werkzeugteils bewegbar ist sowie einem Gebilde, das mit dem Press-Werkzeug zu einer insbesondere einteiligen Halbzeug-Anordnung geformt worden ist;
▪ Figur 4b eine Ausführungsform einer Führungsvorrichtung, mit einer in einer Werkzeugteil-Aufnahmen angeordneten Führungsnut und einem an einem Werkzeugteil angebrachten Führungsteil, das formschlüssig in die Führungsnut zur Ertnöglichung einer Längsverschiebung eines Werkzeugteils in der Press-Vorrichtung eingreift;
▪ Figur 4c eine schematische perspektivische Darstellung eines Teils des bewegbaren Werkzeugteils nach der Figur 2c mit dem daran angebrachten Führungsteil;
▪ Figur 4d eine schematische Darstellung eines Teils des bewegbaren Werkzeugteils nach den Figuren 4b und 4c von oben gesehen, wobei die Figur 4b eine Teil-Seitenansicht eines Ausschnitts des in der Figur 4d dargestellten Gegenstands ist; und
▪ Figur 4e eine schematische perspektivische Darstellung eines Teils des bewegbaren Werkzeugteils nach der Figur 2c;
▪ Figur 5a eine schematische Darstellung einer weiteren Ausführungsform eines Press-Werkzeugs in einer ersten Stellung; und
▪ Figur 5b die Ausführungsform des Press-Werkzeugs nach der Figur 5a in einer zweiten Stellung, bei der die Werkzeugteile das zwischen diesen gelegene Halbzeug-Anordnung zusammenpresst.

Bei dem erfindungsgemäßen Pultrusionsverfahren zur Herstellung eines profilierten Preforms oder eines FVK-Bauteils (in den Figuren nicht gezeigt), insbesondere die jeweils zueinander winklig verlaufende Querschnittsabschnitte aufweisen, wird von einer Dispenser-Vorrichtung 11 zumindest eine mehrschichtige Halbzeug-Anordnung abgegeben und einer Verformungs-Vorrichtung 12 zugeführt.

Bei dem erfindungsgemäßen Pultrusionsverfahren, mit dem insbesondere ein profiliertes FVK-Bauteil mit zueinander winklig verlaufenden Querschnittsabschnitten hergestellt wird, ist die der Verformungs-Vorrichtung 12 zugeführte Halbzeug-Anordnung HA eine Kombination aus mehreren Bahnen von Verstärkungsfaser-Halbzeuglagen 1, 3 und zumindest einem Harzfilm 2.

Erfindungsgemäß können die Verstärkungsfaser-Halbzeuglagen aus einem Gewebe und/oder einen Gelege gebildet sein. Dabei wird unter Gewebe eine strukturierte überlagerung von zueinander quer verlaufenden Schussfäden und Kettfäden verstanden. Unter Gelege wird in diesem Zusammenhang eine Vielzahl von unidirektional verlaufenden Verstärkungsfasern verstanden die in der Dickenrichtung des Geleges miteinander vernäht sind. Erfindungsgemäß werden Verstärkungsfaser- Halbzeuglagen verwendet, die Bindermaterial und somit Harz aufweisen. Da das Harz in diesem Anwendungsfall lediglich als Bindermaterial verwendet wird, dient dieses nicht als Matrixmaterial, sondern nur zur Fixierung verschiedener Verstärkungsfaser- Halbzeuglagen zueinander. Die Halbzeug-Anordnung HA weist deshalb ein Binderharz mit einem Anteil von maximal 15 % am Gesamtgewicht der in der Halbzeug-Anordnung HA verwendeten Verstärkungsfaser-Halbzeuglagen 1, 3 als Bindermaterial zur Fixierung der Verstärkungsfaser-Halbzeuglagen derselben auf.

Das Bindermaterial kann als Pulver, als aufgesprühtes flüssiges Material oder als Vlies verwendet werden. Als Pulver, als aufgesprühtes flüssiges Material kann dieses aus einem Harz und insbesondere einem Epoxidharz gebildet sein. Dabei ist das Bindermaterial auf Verstärkungsfaser-Halbzeuglagen bereits in der Dispenser-Vorrichtung aufgebracht und kann insbesondere auf den Verstärkungsfaser-Halbzeuglagen aufgebracht sein, die auf den Dispenser-Rollen aufgerollt sind.

Durch Verwendung der vorgenannten Materialien können Bauteile auf effiziente Weise und mit hoher Bauteils-Qualität hergestellt werden. Die Bauteile können zudem eine reltaiv komplexe Geometrie haben. Insbesondere können die Bauteile eine Querschnittsfläche mit zueinander winklig verlaufenen Querschnitts-Abschnitten haben. Die Bauteile können alternativ oder zusätzlich dazu auch in ihrer Längsrichtung (Z-Richtung) oder in der Vorschubrichtung gesehen gekrümmt sein. Die verwendeten Materialien erlauben eine entsprechende Verformung der erfindungsgemäßen Verstärkungsfaser-Halbzeuglagen, ohne dass Faserverwerfungen oder Faser-Ondulationen auftreten, die zu einer Verschlechterung der Bauteilqualität führen würden. Dies wird dadurch erreicht, dass bei der erfindungsgemäß vorgesehenen Verformung der Verstärkungsfaser-Halbzeuglagen nur sehr geringe Scherkräfte zwischen diesen auftreten. Insbesondere kann durch das Verwenden von Harzfilm die Menge des Harzes sehr genau dosiert und gleichmäßig verteilt werden, wodurch sich ein relativ konstanter Faservolumen-Gehalt im herzustellenden Bauteil einstellen lässt. Dadurch kann insbesondere die Herstellung eines porenfreien Bauteils gewährleistet werden. Bei dem Ausführungsbeispiel, bei dem zumindest ein Harzfilm in der Dispenser-Vorrichtung aufgerollt ist, kann die erfindungsgemäße Vorrichtung auch für eine Vielzahl von Varianten des herzustellenden Bauteils verwendet werden.

Der Harzfilm kann ein geschlossener oder in seiner flächigen Erstreckung kontinuerlicher Harzfilm oder ein bis zu 90% der Fläche geschlossener Harzfilm sein. Der nicht ganz oder bis zu 90% geschlossene Harzfilm hat insbesondere nicht die Form z.B. eines Gitters, so dass die Ausbildung von Porositäten im herzustellenden Bauteil vermieden wird. Der Harzfilm kann nicht ganz geschlossen sein aufgrund von herstellungsbedingten Fehlstellen.

Bei dem in der Figur 1 dargestellten Ausführungsbeispiel des erfindungsgemäßen Pultrusionsverfahrens werden von der Verformungs-Vorrichtung von der Dispenser-Vorrichtung 11 zwei Halbzeug-Anordnungen HA, HB, eine erste Halbzeug-Anordnung HA und eine zweite Halbzeug-Anordnung HB, abgegeben. Dabei kann jede der Halbzeug-Anordnungen HA, HB durch zwei trockene Gelegelagen oder Gewebebahnen 1, 3 und einen zwischen diesen gelegenen Harzfilm 2 gebildet sein, wie dies nach dem Verfahren bzw. der Vorrichtung zur Herstellung eines profilierten FVK-Bauteils aus zumindest einem ebenen trockenen Gelege und zumindest einem Harzfilm vorgesehen ist.

Das Pultrusionsverfahren bzw. die Pultrusionsvorrichtung, das bzw. die in der Figur 1 dargestellt ist, eignet sich generell zur Herstellung eines profilierten FVK-Bauteils aufgrund zumindest einer von einer Dispenser-Vorrichtung abgegebenen mehrschichtigen Halbzeug-Anordnung, die jeweils aus zumindest einem ebenen trockenen Gelege oder Gewebe 1, 3 und zumindest einem Harzfilm 2.

Bei dieser Variante kann optional die Vorrichtung eingerichtet sein und das Verfahren vorsehen, dass von der Dispenser-Vorrichtung 11 neben diesen Halbzeug-Anordnungen HA, HB zumindest eine weitere mehrschichtige Halbzeug-Anordnung aus zumindest zwei ebenen trockenen Verstärkungsfaser-Halbzeuglagen und insbesondere Gelegelagen und/oder Gewebelagen 1, 3 und zumindest einem zwischen diesen gelegenen Harzfilm 2 abgegeben wird, wobei in diesem Fall beide Halbzeug-Vorrichtungen H1, H2 nebeneinander und insbesondere übereinander gelegen der Verformungs-Vorrichtung 12 zugeführt werden. Insbesondere kann vorgesehen sein, dass zumindest ein Harzfilm 2 zwischen jeweils zwei trockenen Verstärkungsfaser-Halbzeuglagen und insbesondere Gelegelagen und/pder Gewebelagen 1 angeordnet ist. Bei einer oder mehreren der vorgesehenen Halbzeug-Anordnung kann bzw. können auch mehr als zwei Harzfilme 2 verwendet werden. Jede der Halbzeug-Anordnungen ist derart gestaltet, dass die oberste und die unterste Schicht derselben eine Schicht einer trockenen Verstärkungsfaser-Halbzeuglagen und insbesondere Gelegelage und/oder Gewebelage ist und zwischen diesen Schichten zumindest ein Harzfilm 2 und optional zumindest eine weitere trockene Gelegelage und/oder Gewebelage 1 gelegen sind.

Weiterhin eignet sich das Pultrusionsverfahren bzw. die Pultrusionsvorrichtung, das bzw. die in der Figur 1 dargestellt ist, generell zur Herstellung eines profilierten Preforms mit zueinander winklig verlaufenden Querschnittsabschnitten aus zumindest einer mehrschichtigen Halbzeug-Anordnung HA aus mehreren ebenen mit Bindermateiral versehenen Verstärkungsfaser-Halbzeuglagen und insbesondere Gelegelagen und/oder Gewebelagen (in dieser Hinsicht bedeuten die Bezugszeichen 1, 2, 3 jeweils eine solche Verstärkungsfaser-Halbzeuglage).

Bei allen zuvor beschriebenen Ausführungsbeispielen kann, kann zusätzlich auch eine Lage von Prepeg-Material als Zwischenschicht oder können mehrere Lagen von Prepeg-Material als Zwischenschichten verwendet werden. Für den Fall, dass mit den genannten Verfahren in seiner Längsrichtung gekrümmte Preforms bzw. in seiner Längsrichtung gekrümmte Bauteile hergestellt werden, kann als Ausgangsmaterial von der Dispenser-Vorrichtung 11 zugeführte Halbzeug-Lagen, die einen bei dem herzustellenden Preform bzw. Bauteil in der Krümmungsebene gelegenen Querschnittsabschnitt aufweisen, genau eine oder maximal zwei zusätzliche Prepreg-Lagen als Zwischenschichten verwendet werden. Dabei können weiterhin für Lagen, die keinen in der Krümmungsebene gelegenen Querschnittsabschnitt aufweisen, mehrere Prepreg-Lagen insbesondere in Form von Prepreg-Paketen verwendet werden. In letzterem Fall werden Prepreg-Lagen vorzugsweise nach der Verformungs-Vorrichtung und vor dem Press-Werkzeug auf die diesem zugeführte Halbzeug-Anordnung aufgebracht. Dies kann insbesondere zur Ausbildung oder Verstärkung von Flanschseiten vorgesehen sein.

Bei der schematischen Darstellung der Figur 1, bei der die genannten Ausführungsbeispiele der Erfindung dargestellt oder entnehmbar sind, sind die Halbzeuge - die Gelegelagen und/oder Gewebelagen 1, 2, 3 sowie jeweils optional das Prepreg in der Dispenser-Vorrichtung 11 auf Rollen aufgewickelt, so dass diese Halbzeuge der Dispenser-Vorrichtung 11 durch Aufbringung einer entsprechenden Zugkraft mittels einer Ziehvorrichtung 15 entnommen werden können. Dabei ist jede Schicht 1, 2, 3 auf einer separaten Rolle aufgewickelt. Die Dispenser-Vorrichtung 11 weist insbesondere zumindest drei Dispenser-Rollen a1, b1, c1 auf.

Für den Harzfilm können duroplastische Materialien wie ungesättigte Polyesterharze (UP), Phenol (PF), Epoxidharze (EP) oder Vinylester (VE) oder thermoplastische Materialien wie Polypropylen (PP), Polyamid (PA), Polyetheretherketon (PEEK), Polyetherketonketon (PEKK) oder Polyphenylensulfon (PPS), verwendet werden. Der Harzfilm kann insbesondere ein Epoxidharz-Film sein.

Die mehrschichtigen Halbzeug-Anordnungen werden nacheinander einer Verformungs-Vorichtung 12 und einem Press-Werkzeug 13 zur Umbildung der Halbzeug-Anordnungen zu einer einstückigen oder einteiligen Halbzeug-Anordnung zugeführt.

Bei der Ausführungsform der Erfindung zur Herstellung eines profilierten Preforms erfolgt mit der Press-Vorrichtung 13 die Ausbildung einer Halbzeug-Anordnung mit fixierten Gelegen, ein Abschneiden eines Längsabschnitts derselben und Entnahme dieses Längsabschnitts als Preform.

Bei der anderen Ausführungsform der Erfindung zur Herstellung eines profilierten FVK-Bauteils erfolgt in der Press-Vorrichtung 13 ein Erwärmen und ein Pressen der Halbzeug-Anordnung HA3, so dass durch diese Anwendung von Druck und Temperatur eine Durchtränkung des Faserhalbzeugs und eine Teilvernetzung des Harzes des Harzfilms erfolgt, wobei während des Pressens die Vorschubbewegung der Halbzeug-Anordnung unterbrochen wird, optional in einem Temperofen 14 eine Härtung der Halbzeug-Anordnung HA4, bei der eine Vernetzung des Harzes des Harzfilms zu mindestens 80% vorliegt und von der gehärteten Halbzeug-Anordnung HA4 ein Abschneiden eines Längsabschnitts derselben und Entnahme dieses Längsabschnitts als FVK-Bauteil. Dabei ist von der Dispenser-Vorrichtung 11 aus gesehen hinter dem Temperofen 14 eine Zieh-Vorrichtung 15 gelegen, die die zumindest eine Halbzeug-Anordnung HA, HB in Bewegung versetzt und aus der Dispenser-Vorrichtung 11 herauszieht. Hinter der Zieh-Vorrichtung 15 ist eine Schneid-Vorrichtung 16 angeordnet, die die mittlerweile gehärtete Halbzeug-Anordnung auf vorbestimmte Längen-Abschnitte schneidet, die im weiteren Produktionsverfahren zur Herstellung des Bauteils B oder von Bauteilen verwendet werden. Die Pultrusionsanlage P kann bei diesem Ausführungsbeispiel aufweisen: eine Dispenser-Vorrichtung 11, eine Verformungs-Vorichtung 12, ein PressWerkzeug 13, optional einen Temperofen 14, eine Zieh-Vorrichtung 15 sowie eine Schneid-Vorrichtung 16.

Bei allen zuvor genannten Ausführungsbeispielen zur Erläuterung des erfindungsgemäßen Verfahrens ist die Verformungs-Vorrichtung 12 ein konturgebendes Werkzeug mit einem Eingangsbereich E2 an einer Eingangsseite und einem zu diesem, in der Längsrichtung L der Pultrusionsanlage P bzw. der durch diese geführten Halbzeug-Anordnungen HA und HB gesehen, entfernt gelegenen Ausgangsbereich A2 an einer Ausgangsseite. Generell wird zumindest eine Halbzeug-Anordnung HA der Verformungs-Vorrichtung 12 zugeführt und in dieser abschnittsweise gewinkelt (Figuren 2a bis 2c), um an der Ausgangsseite A2 eine Halbzeug-Anordnung HA3, HB3 zu erhalten, die dieselbe oder eine ähnliche Querschnittsform wie das herzustellende Bauteil B hat. Bei der in den Figuren 1 bis 4 dargestellten Ausführungsform des erfindungsgemäßen Verfahrens wird der Verformungs-Vorrichtung 12 ein Gebilde von zwei Halbzeug-Anordnungen zugeführt. Generell werden bei einer Pultrusionsvorrichtung P zur Verformung und Verarbeitung von zwei oder mehr als zwei von der Dispenser-Vorrichtung 11 abgegebenen Halbzeug-Anordnungen HA1, HB1, diese aneinander oder in Bezug auf die Horizontalebene übereinander gelegt, d.h. in Form eines Gebildes, in die Verformungs-Vorrichtung 12 eingeführt. In dieser wird dann zumindest ein Halbzeug-Querschnittsabschnitt oder Halbzeug-Bereich abschnittsweise gegenüber einem an diesem anschließenden Querschnittsabschnitt oder Halbzeug-Bereich gewinkelt (Figur 2b). Dadurch verlassen die Halbzeug-Anordnungen HA3, HB3 die Verformungs-Vorrichtung 12 an ihrem Ausgang A2 mit einer Querschnittsform, deren Querschnittsteile dieselbe Ausrichtung haben wie dieselben Querschnittsteile des herzustellenden Bauteils, so dass die Halbzeug-Anordnungen HA3, HB3 insbesondere eine Querschnittsform haben, die der Querschnittsform des herzustellenden Bauteils ähnlich oder identisch ist (Figur 2c).

Die eine Halbzeug-Anordnung bzw. die mehreren Halbzeug-Anordnungen HA3, HB3, die am Ausgang der Verformungs-Vorrichtung übereinander liegen, werden dem Press-Werkzeug zugeführt, in dem die zwei übereinander liegenden Halbzeug-Anordnungen HA3, HB3 durch Anwendung von Druck und optional von Temperatur zu einer einteiligen Halbzeug-Anordnung H4 gepresst werden.

Nach dem erfindungsgemäßen Verfahren ist insbesondere vorgesehen, in der Verformungs-Vorrichtung und dem dahinter angeordneten Press-Werkzeug 13 Halbzeuge mit Winkelprofilen herzustellen, also Profile, die im Querschnitt gesehen Abschnitte oder Bereiche aufweisen, die sich in einem Winkel ungleich 0 Grad bzw. 180 Grad zueinander erstrecken. Dadurch können T-Profile, L-Profile, H-Profile, Omega-Profile, Mischformen der genannten Profile, d.h. Profile mit winklig verlaufenden Halbzeug-Oberflächen oder mit gegenüber einem Basis-Querschnittsabschnitt senkrecht oder in einem anderen Winkel abstehenden Halbzeug-Querschnittsabschnitt hergestellt werden. Die abstehenden Halbzeug-Querschnittsbereiche der zumindest einen die Verformungs-Vorrichtung verlassenden Halbzeug-Anordnung bilden somit einen sich in Längsrichtung LH der Halbzeug-Anordnung erstreckenden Flansch oder Kragen.

Die Verformungs-Vorrichtung 12 weist eine Aufnahme- und Führungsvorrichtung (nicht gezeigt) auf, mit der der Querschnitt der zumindest einen Halbzeug-Anordnung HA1, HB1 von einer Ausgangsgestalt in eine Soll-Querschnittsgestalt geändert wird. Nach einem Ausführungsbeispiel weist die Aufnahme- und Führungsvorrichtung einen Verformungskanal (in den Figuren nicht dargestellt) zum Hindurchführen der zumindest einen Halbzeug-Anordnung HA, HB auf, dessen Querschnitt sich in der Längsrichtung L2 der Verformungs-Vorrichtung 12 kontinuierlich verändernde Verformungskonturen aufweist, an denen sich die Lage zumindest eines Abschnitts des Querschnitts der Halbzeug-Anordnung ändert. Somit nimmt die Aufnahme- und Führungsvorrichtung die zumindest eine Halbzeug-Anordnung und insbesondere einen oder mehrere Bereiche derselben auf und hält diese während des Durchlaufens der Verformungs-Vorrichtung 12 in sich kontinuierlich verändernden Lagen, so dass die Lagen von Bereichen der Halbzeug-Anordnung abhängig von der Position in der Verformungs-Vorrichtung geführt werden. Dabei ist die Aufnahme- und Führungsvorrichtung derart gestaltet, dass die Bereiche beim Durchlaufen der zumindest einen Halbzeug-Anordnung kontinuierlich von einer Ausgangslage in eine Soll-Lage gebracht werden. Die Halbzeug-Anordnung wird mit diesen in ihren Soll-Lagen befindlichen Bereichen dem Press-Werkzeug 13 zugeführt.

Zur Führung der Lagenveränderung von Halbzeug-Bereichen kann die Aufnahme- und Führungsvorrichtung alternativ oder zusätzlich zu den Verformungskonturen Rollenführungen mit Rollen und z.B. Zylinderrollen aufweisen, deren Achsen quer oder vertikal zur Vorschubrichtung V der Halbzeug-Anordnung verlaufen. Dabei können auch Rollen in Bezug auf die Längsrichtung L2 der Verformungs-Vorrichtung 13, d.h. vertikal zur Längsrichtung L2 übereinander angeordnet sein, so dass z.B. mehrere in Längsrichtung L2 hintereinander angeordnete Anordnungen aus zumindest zwei übereinander gelegenen Rollen derart vorgesehen sein können, dass zwischen diesen eine Halbzeug-Anordnung HA, HB oder ein Bereich derselben, passiv hindurchgeführt werden kann oder, wenn die Rollen angetrieben werden, mit Unterstützung der Rollendrehung durch die Verformungs-Vorrichtung 13 hindurchgeführt werden kann. In Vorschubrichtung hintereinander gelegene Rollen können dabei eine sich in der Längsrichtung L2 kontinuierlich ändernde Lage haben, um die Lage von Halbzeugen oder Halbzeug-Bereichen zu ändern, wenn diese über die Rollen geführt werden. Auch können die oberen Rollen, d.h. bei Hindurchführen der Halbzeug-Anordnung über der Halbzeug-Anordnung gelegenen Rollen, in der Längsrichtung L2 gesehen zumindest abschnittsweise versetzt zu den unteren Rollen angeordnet sein. Zwischen den Rollen können Aufnahme- und/oder Führungsmittel zum Halten und Führen der Halbzeug-Anordnung vorgesehen sein.

Mit einer derartigen Aufnahme- und Führungsvorrichtung kann ein Bereich oder können mehrere Querschnittsbereiche von zumindest einer Halbzeug-Anordnung, die durch das Verformungs-Werkzeug hindurchgeführt wird, an der Ausgangsseite A2 derselben in eine Soll-Lage gebracht werden.

Verschiedene Ausführungsbeispiele der Verformungs-Vorrichtung 12 und der Verformung von Halbzeug-Anordnungen werden im Folgenden an Hand der Figuren 2a, 2b und 2c beschrieben. Zur Ausbildung einer Halbzeug-Anordnung nach der Figur 2c werden zunächst zwei von der Dispenser-Vorrichtung 11 abgegebene ebene Halbzeug-Anordnungen HA1, HB1 in die Verformungs-Vorrichtung 12 eingeführt (Figur 2a), wobei eine erste Halbzeug-Anordnung HA1 vertikal zur Längsrichtung L2 oder X-Achse gesehen oberhalb der zweiten Halbzeug-Anordnung HB1 gelegen ist. Diese Halbzeug-Anordnungen HA1 und HB1 haben im ersten Teil der Verformungs-Vorrichtung 12 einen Abstand in X-Richtung zueinander, wobei in der horizontalen oder Y-Richtung gesehen, die obere Halbzeug-Anordnung HB1 derart über der unteren Halbzeug-Anordnung HA1 positioniert ist, dass zwei nebeneinander liegende Abschnitte HA1-1 und HA1-21 von der oberen Halbzeug-Anordnung HB1 nicht bedeckt wird und dass sich die obere Halbzeug-Anordnung HB1 mit einem ersten Abschnitt HB1-1 über die untere Halbzeug-Anordnung HA1 in der horizontalen oder Y-Richtung gesehen hinaus erstreckt.

Die Orientierung der in die Verformungs-Vorrichtung eingeführten Halbzeug-Anordnung kann auch anders als in einer horizontalen Erstreckung vorgesehen sein.

Die Aufnahme- und Führungsvorrichtung oder die Verformungskonturen der Verformungs-Vorrichtung 13 ist derart gestaltet, dass bei der Bewegung der Halbzeug-Anordnungen in der Vorschub-Richtung V (Figur 1) ein äußerer von der oberen Halbzeug-Anordnung HB1 nicht bedeckter Randabschnitt HA1-1 des Querschnitts der unten liegenden Halbzeug-Anordnung HA gegenüber einem zweiten Abschnitt HA2-1 derselben aufgrund der Verformungskontur des Verformungs-Werkzeugs 12 zunehmend angewinkelt wird. Die untere Halbzeug-Anordnung HA3 weist nach einer ersten in der Figur 2b dargestellten Verformung im Querschnitt gesehen ein winkelförmiges Profil mit einem sich gerade erstreckenden ersten Abschnitt HA3-1 und einen sich gerade und in einem Winkel von 45 Grad zum ersten Bereich HA3-1 erstreckenden zweiten Abschnitt HA3-2 auf. Weiterhin ist die Aufnahme- und Führungsvorrichtung derart gestaltet, dass die zwei Querschnitts-Randabschnitte HB1-1 und HB1-3 der oben liegenden Halbzeug-Anordnung HB1 bei dem Hindurchführen derselben durch die Verformungs-Vorrichtung 12 gegenüber dem zwischen diesen gelegenen mittleren Abschnitt HB1-2 zunehmend angewinkelt wird. In der Figur 2b sind die Zustände HA2, HB2 der Halbzeug-Anordnungen an einer Stelle des Verformungs-Werkzeugs 12 zwischen und in etwa in der Mitte zwischen der Eingangsseite E3 und der Ausgangsseite A3 gezeigt. Dabei sind die äußeren Querschnitts-Abschnitte HB2-1 und HB2-3 der oberen Halbzeug-Anordnung HB2 um einen Winkelbetrag von etwa 45 Grad angewinkelt und nehmen somit etwa das halbe Winkelmaß ein, als diese Halbzeug-Abschnitte in ihrer Soll-Lage an der Ausgangsseite A3 haben. Demgegenüber ist in der Figur 2c der Soll-Zustand der Halbzeug-Anordnungen beim Ausgang A1 der Verformungs-Vorrichtung 12 gezeigt, in dem die Halbzeug-Anordnungen erfindungsgemäß dem Press-Werkzeug 12 zugeführt werden. In diesem Soll-Zustand weist der Querschnitt der unteren Halbzeug-Anordnung HA3 ein winkelförmiges Profil mit einem sich gerade erstreckenden ersten Abschnitt HA3-1 und einen sich gerade und in einem Winkel von 90 Grad zum ersten Bereich HA3-1 erstreckenden zweiten Abschnitt HA3-2 auf. Weiterhin hat dabei die auf der ersten oder unteren Halbzeug-Anordnung HA3 angeordnete obere Halbzeug-Anordnung HB3 eine U-förmige Querschnittsform mit einem auf dem ersten Abschnitt HA3-1 der unteren Halbzeug-Anordnung HA3 gelegenen mittleren Abschnitt HA3-2 und zwei an dessen Enden vertikal von diesem abstehende Abschnitte HA3-1 und HA3-2. Die obere Halbzeug-Anordnung HB3 ist derart auf der unteren Halbzeug-Anordnung HA3 gelegen, dass der zweite Abschnitt HA3-2 einen von dem mittleren Abschnitt HA3-2 der oberen Halbzeug-Anordnung HA3 nicht bedeckten Abschnitt HA3-21 (im Zwischenzustand der Figur 2c ist dies der Abschnitt HA2-21)und einen von dem mittleren Abschnitt HA3-2 der oberen Halbzeug-Anordnung HA3 bedeckten Abschnitt HA3-22 (im Zwischenzustand der Figur 2c ist dies der Abschnitt HA2-22) hat.

In einer weiteren Ausführungsform der Verformungs-Vorrichtung 12 ist ein erstes und/oder ein zweites Werkzeugteil mittels Stell-Vorrichtungen relativ zueinander bewegbar ausgebildet (nicht dargestellt). Vorzugsweise ist dabei das obere Werkzeugteil gegenüber dem unteren Werkzeugteil translatorisch bewegbar. Dabei können die Werkzeughälften der Verformungs-Vorrichtung 12 mittels einer Verstellvorrichtung und einer mit dieser gekoppelten Antriebsvorrichtung zueinander bewegbar sein. Weiterhin kann vorgesehen sein, dass das Schließen des Werkzeugs unter Anwendung einer vorbestimmten Kraft erfolgt, um ein Pressen der zumindest einen durch die Verformungs-Vorrichtung 12 geführten Halbzeug-Anordnung H in vorbestimmter Weise vorzunehmen, so dass die Werkzeughälften als Presswerkzeug arbeiten können. Die Verformungs-Vorrichtung 12 kann daher als Press-Umform-Werkzeug gestaltet sein.

Auch kann vorgesehen sein, dass das obere Werkzeugteil räumlich gegenüber dem unteren Werkzeugteil bewegbar ist. Dadurch kann das Spaltmaß oder die Größe des zwischen den Werkzeugteilen vorhandenen Kanals für die Aufnahme und die Hindurchführung der Halbzeug-Anordnung eingestellt werden. Weiterhin können dadurch, insbesondere während des Pultrusionsvorgangs die Werkzeugteile zueinander bewegt, d.h. geöffnet und geschlossen werden, um den Transportvorgang zu unterstützen oder beim Zusammenfahren zu hemmen. Insbesondere kann diese Maßnahme für den Fall, dass eine Geschwindigkeits-Steuerung oder -Regelung für eine nachfolgende Vorrichtung, wie für das Press-Werkzeug 13, für den Temperofen 14 und/oder für die Schneid-Vorrichtung 16, vorgesehen ist, angewendet werden.

Durch das Zusammenführen von zwei oder mehr als zwei, also mehreren der Verformungs-Vorrichtung 12 zugeführten Halbzeug-Anordnungen HA, HB bzw. HA1, HB1 und durch die Verformung von Halbzeug-Bereichen in der Verformungs-Vorrichtung 12 können mit der Pultrusionsanlage P Preforms bzw. FVK-Bauteile komplexer Struktur gebildet werden.

In der Verformungs-Vorrichtung 12 sind im gezeigten Ausführungsbeispiel mehrere von der Dispenser-Vorrichtung 11 als ebene Halbzeuge der Eingangsseite A3 der Verformungs-Vorrichtung 12 zugeführte Halbzeug-Anordnungen HA, HB zu einem Gebilde von Halbzeug-Anordnungen mit demgegenüber an der Ausgangsseite A3 veränderten Querschnittsgestalten HA3, HB3 geformt worden, die hinsichtlich der Orientierungen der Auerschnittsabschnitte auch das herzustellende Bauteil B hat. Der Querschnitt des Gebildes der gesamten Halbzeug-Anordnung an der Ausgangsseite A2 weist insbesondere zumindest zwei zueinander winklig verlaufende Halbzeug-Querschnittsbereiche HA3-21 und HA3-1 auf, d.h. die Längsrichtung oder Mittellinien von zwei nebeneinander liegenden Halbzeug-Querschnittsbereichen HA3-21 und HA3-1 verlaufen winklig zueinander. Somit haben die nebeneinander liegenden Halbzeug-Querschnittsbereiche HA3-21 und HA3-1 Oberseiten 21 a bzw. 21 b, deren Flächen-Normalen winklig, im besonderen Fall und im in den Figuren 2c dargestellten Ausführungsbeispiel senkrecht zueinander verlaufende Oberflächen.

Bei den erfindungsgemäßen Ausführungsbeispielen zur Herstellung eines profilierten Preforms erfolgt im Press-Werkzeug ein Erwärmen der verwendeten trockenen Gelege und des Harzmaterials. Bei der Verwendung von Binder bewirkt das Erwärmen desselben zunächst ein Verflüssigen des Binders und anschließend eine Verfestigung des Binders. Im Press-Werkzeug wird gleichzeitig Druck auf die Halbzeug-Anordnung aufgebracht, um diese zu kompaktieren. Durch Verfestigen des Binders und die Kompaktierung der Querschnittsabschnitte wird eine formerhaltende Fixierung der Querschnittsabschnitte der Halbzeug-Anordnung HA3 zueinander bei der Verwendung des Binders erreicht. Bei der Verwendung von Harzfilm als Harzmaterial bewirkt das Erwärmen desselben zunächst ein Verflüssigen des Harzes und durch Temperaturanwendung und gleichzeitige Druckbeaufschlagung im Press-Werkzeug eine Durchtränkung und eine Kompaktierung der Gelege, wodurch eine formerhaltende Fixierung der Querschnittsabschnitte der Halbzeug-Anordnung HA3 zueinander erreicht wird.

Bei den erfindungsgemäßen Ausführungsbeispielen zur Herstellung eines profilierten FVK-Bauteils erfolgt im Press-Werkzeug 13 ein Erwärmen und ein Pressen der Halbzeug-Anordnung HA3, so dass durch diese Anwendung von Druck und Temperatur eine Durchtränkung des Faserhalbzeugs und eine Teilvernetzung des Harzes des Harzfilms erfolgt, wobei während des Pressens die Vorschubbewegung der Halbzeug-Anordnung unterbrochen wird. Anschließend kann optional eine Härtung der Halbzeug-Anordnung H4 in einem Temperofen 14 vorgesehen sein, bei der eine Vernetzung des Harzes des Harzfilms zu mindestens 80% erreicht wird. Die Härtung oder Teil-Härtung kann bei diesem Verfahren auch im Press-Werkzeug 13 erfolgen. Bei dem Vorsehen einer Härtung im Temperofen 14 wird im Press-Werkzeug 13 eine Härtung mit zumindest einer Teilvernetzung des Harzes mit einem Vernetzungsgrad von vorzugsweise 40% bis 70% vorgenommen, bei der ein "free-standing eure", d.h. ein eigenständiges Stehen der Querschnittsabschnitte der Halbzeug-Anordnung erreicht wird. Hierzu erfolgt im Press-Werkzeug 13 insbesondere eine Erwärmung der Halbzeug-Anordnung auf eine Temperatur zwischen 100 Grad bis 200 Grad bei der Verwendung von Epoxidharz für den Harzfilm und bei der Verwendung von Thermoplasten für den Harzfilm insbesondere ein Erwärmen auf eine Temperatur zwischen 300 Grad und 400 Grad. Alternativ kann im Press-Werkzeug 13 ein Erwärmen durchgeführt werden, bei dem eine zumindest 90%ige und sogar 100%ige Vernetzung des Harzes erfolgt.

Das in der Figur 4a dargestellte Press-Werkzeug 13, das für das Pressen eines Gebildes HA-3, HB-3 von Halbzeug-Anordnungen bei den vorgenannten Ausführungsbeispielen des Verfahrens vorgesehen ist, weist ein Basis-Werkzeugteil oder ein erstes Werkzeugteil 31 auf, auf der das Gebilde HA-3, HB-3 von Halbzeug-Anordnungen gemäß der Figur 2c aufgelegt werden kann. Das Gebilde der Halbzeug-Anordnungen HA3 und HB3 gemäß der Figur 2c weist eine in Bezug auf die X-Richtung gesehen untere Halbzeug-Anordnung HA3 und eine obere, d.h. auf der unteren Halbzeug-Anordnung gelegene Halbzeug-Anordnung HB3 auf. Das Basis-Werkzeugteil 31 ist zur Aufnahme des Gebildes HA-3, HB-3 von Halbzeug-Anordnungen vorgesehen, so dass dabei die untere Halbzeug-Anordnung HA3 des Gebildes auf dem Basis-Werkzeugteil 31 gelegen ist. Der erste Abschnitt HA3-1 der untere Halbzeug-Anordnung HA3 erstreckt sich bei dem Auflegen der Anordnung HA3 in horizontaler Richtung auf einer ersten Werkzeug-Oberfläche 31a mit einer horizontal verlaufenden Flächenkontur des Basis-Werkzeugteils 31. Der sich gerade und in einem Winkel von 90 Grad zum ersten Bereich HA3-1 erstreckende zweite Abschnitt HA3-2 erstreckt sich bei dem Auflegen der Anordnung HA3 auf einer zweiten Werkzeug-Oberfläche 31 b des Basis-Werkzeugteils 31 mit einer vertikal verlaufenden Flächenkontur. Die Werkzeugoberfläche mit der ersten und zweiten Werkzeug-Oberfläche 31 a, 31 b des Basis-Werkzeugteils 31 ist derart gebildet, dass bei der vorbestimmten Lage des Halbzeug-Anordnung HA3 auf dem Basis-Werkzeugteil 31 die diesem zugewandte Seiten 22a, 22b der Halbzeug-Bereiche HB3-1 bzw. HB3-2 in Anlage mit der Werkzeugoberfläche des ersten Werkzeugteils 31 gebracht und so auf dieser aufgelegt werden kann. Dementsprechend liegt an einer ersten Werkzeug-Oberfläche 31 a des Basis-Werkzeugteils 31 mit der in dem gezeigten Ausführungsbeispiel vertikal verlaufenden Flächenkontur die dieser zugewandte Oberfläche 22a des Halbzeug-Abschnitts HA3-1 an und liegt auf der zweiten Werkzeug-Oberfläche 31b mit der horizontal verlaufenden Flächenkontur die dieser zugewandte Oberfläche 22b des Halbzeug-Abschnitts HA3-2 an.

Generell weist also das Press-Werkzeug 13 zumindest ein Werkzeugteil 32 mit zwei winklig zueinander verlaufenden Werkzeugteil-Oberflächen auf, das mittels zumindest einer Verstell-Vorrichtung relativ zu einem als Gegenlage wirkenden Werkzeugteil 31 mit zwei winklig zueinander verlaufenden Werkzeugteil-Oberflächen bewegbar ist, wobei die Werkzeugteile derart angeordnet sind, dass jeweils eine Werkzeugteil-Oberfläche eines Werkzeugteils und eine Werkzeugteil-Oberfläche des anderen Werkzeugteils mit zueinander entgegengesetzt gerichteten Flächen-Normalen gegenüber liegen, so dass die Halbzeug-Anordnung HA3, HB3 mit einem zueinander winklig verlaufenden Querschnittsabschnitten in Anlage mit den Werkzeugteilen gebracht werden kann.

Zum Pressen des Gebildes auf Halbzeug-Anordnungen HA3, HB3 gegen das erste Werkzeugteil 31 ist ein zweites 32, ein drittes 33 und ein viertes 34 Werkzeugteil vorgesehen. Das erste oder Basis-Werkzeugteil 31 ist bei einer Ausführungsform des Press-Werkzeugs 13 als Auflageteil des Press-Werkzeugs 13 und somit nicht selbst bewegbar ausgebildet, jedoch kann das erste Werkzeugteil 31 auch mittels einer Verstellvorrichtung bewegbar ausgebildet sein.

Das auf einer ersten Seite L des Press-Werkzeugs 13 gelegene zweite Werkzeugteil 32 weist eine erste Werkzeug-Oberfläche 32a auf, die entgegen gesetzt zu der vertikal verlaufenden Oberfläche 31a des ersten Werkzeugteils 31 gelegen ist und zu dieser parallel verläuft. Das zweite Werkzeugteil 32 ist mittels einer ersten Verstellvorrichtung 41 in Y-Richtung relativ zum ersten Werkzeugteil 31 und insbesondere in Richtung der Normalen der gegenüberliegenden Werkzeug-Oberfläche 31a des ersten Werkzeugteils 31 oder in Richtung zu einer ersten Seite R bewegbar, so dass der erste, zwischen dem ersten und dem zweiten Werkzeugteil 31, 32 gelegene Abschnitt HA3-1 der unteren Halbzeug-Anordnung HA3 durch das Zusammenfahren der Werkzeugteile 31, 32 in Y-Richtung zu dem Abschnitt H4-1 gepresst werden kann (Bewegung R1).

Weiterhin ist das zweite Werkzeugteil 32 des Press-Werkzeugs 13 nach der Figur 4a mittels einer zweiten Verstell-Vorrichtung 42 in der X-Richtung bewegbar, so dass der zweite von der oberen Halbzeug-Anordnung HA3 nicht bedeckte Abschnitt HA3-21 der unteren Halbzeug-Anordnung HA3 durch das Zusammenfahren des ersten und des zweiten Werkzeugteils 31, 32 in X-Richtung zu dem Abschnitt H4-21 gepresst werden kann (Bewegung R2).

Bei der Ausführungsform des Press-Werkzeuges 13 nach der Figur 4a ist ein oberhalb des ersten Werkzeugteils 31 gelegenes, d.h. vom ersten Werkzeugteil 31 aus gesehen in Richtung zu einer oberen Seite BB gelegenes drittes Werkzeugteil 33 vorgesehen, das in die Querschnittsausnehmung oberhalb des mittleren Abschnitts HB3-2 der oberen Halbzeug-Anordnung HB3 (Figur 2c) einsetzbar ist (Figur 4a). Die Querschnittsausnehmung ist durch die Halbzeug-Oberflächen 24a, 24b, 24c begrenzt, an die bei Einsetzen des dritten Werkzeugteils 33 dessen Seiten 33a, 33b bzw. 33c zur Anlage gebracht werden. Um das dritte Werkzeugteil 33 in X-Richtung bewegen zu können, ist in der Ausführungsform der Figur 4a das dritte Werkzeugteil 33 an einer mit der zweiten Versteilvorrichtung 42 gekoppelten Werkzeugteil-Aufnahme 44 bewegungsgekoppelt, so dass die Betätigung der zweiten Versteilvorrichtung 42 sowohl das zweite Werkzeugteil 32 als auch das dritte Werkzeugteil 33 in der X-Richtung bewegt. Weiterhin ist das dritte Werkzeugteil 33 von dem zweiten Werkzeugteil 32 insbesondere in Y-Richtung entkoppelt. Dadurch bewegt sich das dritte Werkzeugteil 33 in der zweiten Richtung R2 oder der X-Richtung, wenn das zweite Werkzeugteil 32 in der zweiten Richtung R2 bewegt wird. Somit werden die übereinander gelegenen Abschnitte HA3-22 und HB3-2 bei einer Bewegung des zweiten Werkzeugteils 32 in der negativen X-Richtung, d.h. in Richtung zu der unteren Seite AA, zusammen gepresst.

Um zu erreichen, dass die Betätigung der zweiten Verstellvorrichtung 42 sowohl das zweite Werkzeugteil 32 als auch das dritte Werkzeugteil 33 in der Y-Richtung bewegt, kann das dritte Werkzeugteil 33, wie das zweite Werkzeugteil 32, auch direkt an die zweite Versteilvorrichtung 42 gekoppelt sein.

Bei Ausübung einer bestimmten Druckkraft durch die Werkzeugteile 32, 33 und optional unter Einwirkung eines vorbestimmten Temperaturverlaufs im Press-Werkzeug 13 werden die übereinander liegenden Abschnitte HA3-22, HB3-2 zweier Halbzeug-Anordnungen HA3, HB3 zu einer einteiligen oder einstückigen Schicht zusammen gepresst, so dass nach dem Press-Vorgang ein einteiliges oder einstückiges Halbzeug H4 das Press-Werkzeug entsteht und das Press-Werkzeug verlässt.

Weiterhin ist bei der Ausführungsform des Press-Werkzeugs 13 nach der Figur 4a ein viertes Werkzeugteil 34 vorgesehen, das auf der zweiten Seite des Press-Werkzeugs 13 gelegen ist und das in der ersten Richtung R1, also in der Y-Richtung relativ zu den andern Werkzeugteilen und insbesondere zu dem ersten Werkzeugteil 31 bewegbar ist. Das vierte Werkzeugteil 34 kann auch nicht bewegbar oder als Teil des ersten Werkzeugteils 31 im Press-Werkzeug eingerichtet sein. Das vierte Werkzeugteil 34 hat eine Werkzeugteil-Oberfläche 34a, deren Flächen-Normale in der negativen Y-Richtung verläuft, so dass diese Werkzeugteil-Oberfläche 34a zur Anlage an die die am weitesten in Richtung zur zweiten Seite gelegene Außenfläche 25a des ersten Querschnitt-Abschnitts HA3-1 der oberen Halbzeug-Anordnung HA3 gebracht werden kann. Weiterhin weist das zweite Werkzeugteil 32 eine Werkzeugteil-Oberfläche 32c auf, deren Flächen-Normale in der positiven Y-Richtung und zur zweiten Seite hin gerichtet ist, und an die die Oberfläche des linken Schenkels HB3-3 der U-förmigen Halbzeug-Anordnung HB3, deren Flächen-Normale in negative Y-Richtung gerichtet ist, zur Anlage gebracht werden kann.

Durch die Bewegbarkeit des zweiten Werkzeugteils 32 gegen das als Gegenlage wirkende vierte Werkzeugteil 34 sowie durch die Anordnung des dritten Werkzeugteils 33 zwischen den Werkzeugteilen 32, 34 und zwischen den Schenkeln HB3-1 und HB3-3 können die Querschnitts-Abschnitte der Halbzeug-Anordnung mit Werkzeugteil-Oberflächen gepresst werden, deren Flächen-Normalen in der Y-Richtung gerichtet sind.

Durch die Anordnung der Werkzeugteile 31, 32, 33, 34 der Press-Vorrichtung 13 mit Werkzeugteil-Oberflächen, deren Flächen-Normalen entgegengesetzt zu den Flächen-Normalen der an diesen anliegenden und durch diese zu pressenden Halbzeug-Abschnitte bzw. entgegengesetzt zu den Flächen-Normalen der dem bewegbaren Werkzeugteil zugewandten Oberflächen des als Gegenlage wirkenden Werkzeugteils gerichtet sind, sowie durch die Bewegbarkeit der Werkzeugteile mittels der Verstell-Vorrichtungen 41, 42 in Richtung dieser Flächen-Normalen relativ zueinander, ist ein Press-Vorgang mit Nachpressen und somit eine Formung des Gebildes aus Halbzeug-Anordnungen HA3, HB3 zu einem einstückigen oder einteiligen Halbzeug H4 hoher Qualität möglich. Dabei kann zur Bewegung des bewegbaren Werkzeugteils zumindest eine Verstell-Vorrichtung verwendet werden, mit der jeweils eine Linearbewegung des bewegbaren Werkzeugteils in Richtung auf jede Flächen-Normale der diesem Werkzeugteil zugewandten Oberflächen des Gebildes aus Halbzeug- Anordnungen durchführbar ist. Dabei ist zumindest das Werkzeugteil oder die Werkzeugteile mittels der Verstell-Vorrichtung bewegbar vorgesehen, die von einer Gegenlage aus gesehen jenseits einer Querschnitts-Mittellinie des Gebildes von Halbzeug-Anordnungen gelegen sind und die zu pressenden Querschnittsabschnitte gegen die Gegenlage pressen können. Insbesondere können mehrere Verstell-Vorrichtungen 51, 52 zur Bewegung des bewegbaren Werkzeugteils 32 vorgesehen sein, von denen jede eine Linearbewegung in der Richtung jeweils einer Oberflächen-Normalen des als Gegenlage wirkenden Werkzeugteils durchführen kann.

Im dargestellten Anwendungsfall verlaufen bei dem in das Press-Werkzeug 13 dieses Gebildes von Halbzeug-Anordnungen gemäß Figur 2c die Querschnittsbereiche HA3-1 und HA3-21 oder deren Mittellinien senkrecht zueinander und dementsprechend verlaufen die Flächen-Normalen dieser Querschnittsbereiche HA3-1 und HA3-21 ebenfalls senkrecht zueinander (s. Figur 2c). Zum Anpressen des zumindest einen bewegbaren Werkzeugteils 32 an die entsprechenden Oberseiten der generell winklig zueinander verlaufenden Querschnittsbereiche HA3-1 und HA3-21 sowie zum Nachdrücken des bewegbaren Werkzeugteils gegenüber diesen Querschnittsbereichen HA3-1 und HA3-21 ist dieses in Richtung der beiden Flächen-Normalen, und zwar einer ersten und einer zweiten Flächen-Normalen, bewegbar angeordnet. Da im gegebenen Fall die Querschnittsbereiche HA3-1 und HA3-21 rechtwinklig zueinander verlaufen, ist das Werkzeugteil 32 auch in zwei rechtwinklig zueinander verlaufenden Richtungen gegenüber dem ersten Werkzeugteil 31 bewegbar. Hierfür sind in einer Ausführungsform der Press-Vorrichtung 13 zwei Linear-Verstellvorrichtungen vorgesehen, die insbesondere zwei Hub-Zylinder 41, 42 sein können, deren Endseiten jeweils einerseits an einer drehfesten Werkzeug-Lagervorrichtung 40a bzw. 40b und andererseits an einer Werkzeugteil-Aufnahme 43 bzw. 44 anlegbar sind. Die Endseiten der Linear-Verstellvorrichtungen oder Hub-Zylinder können auch mit der jeweiligen Werkzeug-Lagervorrichtung 40a bzw. 40b und/oder der jeweiligen Werkzeugteil-Aufnahme 43 bzw. 44 verbunden sein. Die Werkzeug-Lagervorrichtungen 40a bzw. 40b können auch als eine einstückige oder aus miteinander verbundenen Teilen gebildete Werkzeug-Lagervorrichtung 40 ausgeführt sein. Die Hub- oder Verstell-Zylinder können z.B. hydraulisch, elektrisch oder pneumatisch betrieben sein.

Bei der Ausführung von mehreren Verstellvorrichtungen 41, 42 zum Pressen eines Halbzeug-Abschnitts derart, dass diese jeweils eine Linear-Bewegung des an diese angekoppelten Werkzeugteils ausführen können, wobei das an diese angekoppelte Werkzeugteil Oberflächen mit Oberflächen-Normalen, die winklig zueinander gerichtet sind, hat, ist zwischen jeder Verstell-Vorrichtung und dem durch diese bewegbaren Werkzeugteil eine Führungsvorrichtung gekoppelt, die eine Relativbewegung des Werkzeugteils gegenüber jeder dieser Verstell-Vorrichtungen zulässt, wobei sich das Werkzeugteil relativ zu jeweils einer Verstell-Vorrichtung in Richtung des Verfaufs derjenigen Werkzeugteil-Oberfläche bewegen kann, deren Oberflächen-Normale in Richtung der Verstellbewegung zu dieser jeweiligen Verstell-Vorrichtung verläuft. Dieser Lösungsaspekt wird im Folgenden an Hand der in der Figur 4a dargestellten Ausführungsbeispiele beschrieben.

Die erste Werkzeugteil-Aufnahme 43, die in Richtung der ersten Flächen-Normalen bewegbar ist, und das bewegbare Werkzeugteil 32 bilden eine erste Führungsvorrichtung 51, durch die das bewegbare Werkzeugteil 32 gegenüber der ersten Werkzeugteil-Aufnahme 43 vertikal zur ersten Flächen-Normalen (und vertikal zur Längsrichtung L3) oder entlang der Oberfläche des Halbzeug-Bereichs H4-1 und somit gegenüber dem ersten Werkzeugteil 31 in der Richtung R2 verschiebbar und hin und her bewegbar ist. Weiterhin bilden die zweite Werkzeugteil-Aufnahme 44, die in Richtung der zweiten Flächen-Normalen bewegbar ist, und das bewegbare Werkzeugteil 32 eine zweite Führungsvorrichtung 52, durch die das bewegbare Werkzeugteil 32 gegenüber der zweiten Werkzeugteil-Aufnahme 44 vertikal zur zweiten Flächen-Normalen (und vertikal zur Längsrichtung L3) oder entlang der Oberfläche des Halbzeug-Bereichs H4-21 und somit gegenüber dem ersten Werkzeugteil 31 in der Richtung R1 verschiebbar oder hin und her bewegbar ist.

Die Führungsvorrichtungen 51, 52 können mit einer Kopplung einer Führungsnut mit einem in diese eingreifenden Führungsteil ausgebildet sein. In der in den Figuren 4d und 4e dargestellten Ausführungsform sind die Führungsvorrichtungen 51 bzw. 52 mit jeweils einer in der ersten und zweiten Werkzeugteil-Aufnahme 43 bzw. 44 geformten Führungsnut 45 bzw. 46 und mit jeweils einem an dem bewegbaren Werkzeugteil 32 angebrachten Führungsteil 47 bzw. 48 mit trapezförmigen Querschnitt (Figur 4d) gebildet, das teilweise formschlüssig die jeweilige Führungsnut 45 bzw. 46 eingreift. Vorzugsweise sind entlang des Werkzeugteils 32 mehrere Führungsteile 47 bzw. 48 angeordnet, wobei diese in der Längsrichtung L3 des Press Werkzeugs 13 gesehen hintereinander an der jeweiligen Außenseite des Werkzeugteils 32 und in der jeweiligen Orientierung angeordnet sind (Figur 4d). Entsprechend sind entlang der Werkzeugteil-Aufnahme 43 bzw. 44 mehrere Führungsnuten 45 bzw. 46 zur Aufnahme des jeweiligen Führungsteils 47 bzw. 48 angeordnet, wobei die Führungsnuten 45 bzw. 46 in der Längsrichtung L3 des Press Werkzeugs 13 gesehen hintereinander an der jeweiligen dem Werkzeugteil 32 zugewandten Seite der Werkzeugteil-Aufnahme 43 bzw. 44 und in der jeweiligen Orientierung angeordnet sind. Die Führungsteile 47 bzw. 48 und die Führungsnuten 45 bzw. 46 können auch eine anderen Querschnittsform als in den Figuren dargestellt haben, wobei die Führungsteile 47 bzw. 48 in die Führungsnuten 45 bzw. 46 eingreifen und eine Linearverschiebung des jeweiligen Werkzeugteils 32 gegenüber den Verstell-Vorrichtungen 41, 42 ermöglicht. Alternativ oder zusätzlich können die Führungsteile 47 bzw. 48 auch an die Verstell-Vorrichtungen 41, 42 gekoppelt sein und die Führungsnuten 45 bzw. 46 am Werkzeugteil 32 vorgesehen sein.

Durch das Bewegen des bewegbaren Werkzeugteils 32 mittels der zwei Verstell-Vorrichtungen 41, 42 in Richtung der Flächen-Normalen der Anlageflächen eines gegenüber zumindest einem weiteren Werkzeugteil, das in dem beschriebenen Ausführungsbeispiel das feststehende, d.h. nicht bewegbare Basis-Werkzeugteil 31 ist, werden die in das Press-Werkzeug 13 eingeführten und zwischen den zueinander bewegbaren Werkzeugteilen gelegenen Halbzeug-Anordnungen HA3, HB3 (Figur 2c) unter Ausübung einer Druckkraft und optional mit der Anwendung einer vorbestimmten Temperatur zu einem im Querschnitt einteiligen Halbzeug H4 geformt. Dabei können die verschiedenen Lagen, die das Gebilde G aus Halbzeug-Anordnungen HA3, HB3 in der Verformungs-Vorrichtung 12 hat, insbesondere zu einer einheitlichen Querschnitts-Schicht gepresst werden. Das Press-Werkzeug 13 ist weiterhin derart gestaltet, dass in einem zusammengefahrenen Zustand der Werkzeugteile, d.h. in einem Zustand, in dem das bewegbare Werkzeugteil 32 mit vorbestimmter Kraft auf die auf der Oberfläche des nicht bewegbaren Werkzeugteils 31 gelegenen und somit zwischen den Werkzeugteilen gelegenen Halbzeug-Anordnungen HA3, HB3 drückt, die zwischen diesen liegenden Halbzeug-Anordnungen HA3, HB3 gepresst werden und in Zeitabständen oder zeitabhängig ein Nachfahren des bewegbaren Werkzeugteils 32 möglich ist, wenn sich die Materialdicke der dadurch entstehenden einteiligen Halbzeug-Anordnung H4 bei Ausübung des Druckes aufgrund aus der Halbzeug-Anordnung verursachten Materialkompaktierung verringert.

Als Press-Werkzeug 13 bzw. die zumindest eine mit diesem zu pressende Halbzeug-Anordnung kann auch anders gestaltet sein. Im Folgenden seien einige Varianten konkret beschrieben:
Beispielsweise kann lediglich eine Halbzeug-Anordnung zum Formen im Press-Werkzeug 13 vorgesehen sein, das lediglich die Querschnitts-Abschnitte HA3-1 und HA3-2 und somit ein einfaches Winkelprofil aufweist. In diesem Fall ist es ausreichend, das Press-Werkzeug 13 mit dem ersten Werkzeugteil 31 und dem zweiten Werkzeugteil 32 mit jeweils entsprechenden Dimensionierungen vorzusehen, wobei zumindest das zweite Werkzeugteil 32 mittels der ersten 41 und zweiten 42 Verstell-Vorrichtung in Richtung zum ersten Werkzeugteil 31 bewegbar sind. Dabei können die Richtungen, in denen sich die Halbzeug-Querschnittsabschnitte HA3-1 und HA3-2 erstrecken, auch in einem anderen Winkel als 90 Grad zueinander verlaufen. Dann werden die Verstellrichtungen R1 und R2 des zweiten Werkzeugteils 32 so vorgesehen, dass diese in Richtung der Flächen-Normalen der Querschnitts-Abschnitte des Winkel-Profils gerichtet sind.

Auch kann in einer Variante des Press-Werkzeuges 13 dieses für das Pressen und Formen einer U-förmigen Halbzeug-Anordnung gestaltet und eingerichtet sein, die z.B. aus der oberen Halbzeug-Anordnung HB3 gemäß Figur 2c gebildet ist. In diesem Fall kann das zweite Werkzeugteil 32 ohne den Abschnitt mit der zweiten Werkzeugteil-Oberfläche 32a gestaltet sein.

Auch kann z.B. eine Halbzeug-Anordnung als ganzes H-Profil oder als teilweises H-Profil mit einem oder mehreren fehlenden Schenkeln, d.h. mit zumindest zwei parallel und sich von einem mittleren, in Y-Richtung oder auf dem ersten Werkzeugteil 31 aufliegenden Abschnitte wegragenden Abschnitte, gestaltet sein. In diesem Falle bilden also die parallel zueinander verlaufenen Schenkel eine sich zwischen diesen ergebende Querschnittsausnehmung, in die - ausgehend von dem in der Figur 4e dargestellten Ausführungsbeispiel - ein Werkzeugteil 33 einsetzbar ist, das in Y-Richtung von dem zweiten Werkzeugteil 31 gegen ein viertes Werkzeugteil in Y-Richtung gepresst werden kann.

Generell und insbesondere bei den vorgenannten Anwendungsfällen, wenn sich die Abschnitte von Halbzeug-Anordnungen in zwei winklig zueinander verlaufenden Richtungen erstrecken, kann die Anordnung nach der Figur 4a generell verwendet werden, solange die Verstell-Anordnungen so eingerichtet sind, dass zumindest ein Werkzeugteil 32 relativ zu der Bewegung der Verstell-Vorrichtung zusätzlich in diesen zwei Winkeln bewegbar ist.

Das Press-Werkzeug 13 weist generell zumindest zwei Werkzeugteile auf, die relativ zueinander bewegbar sind, um das in das Press-Werkzeug 13 eingeführte Gebilde aus Halbzeug-Anordnungen ohne Veränderung der Ausrichtung von Querschnittsbereiche gegenüber den Querschnittsbereichen von Halbzeug-Anordnungen gemäß Figur 2c zu pressen.

Bei einer Ausführungsform weist das Press-Werkzeug zum Press- Verformen eines in das Werkzeug eingeführten Gebildes aus Halbzeug- Anordnungen mit komplexer Struktur zumindest ein erstes nicht bewegbares Werkzeugteil und zumindest ein gegenüber diesem bewegbares Werkzeugteil auf, um auch ein Nachpressen des in das Press-Werkzeug 13 eingeführten Gebildes aus Halbzeug- Anordnungen ohne Veränderung der Ausrichtung von winklig zueinander verlaufenden Querschnittsbereichen durchführen zu können. Bei einer Variante dieser Ausführungsform weist das zumindest eine bewegbare Werkzeugteil zwei winklig zueinander verlaufende Anlageflächen mit einer ersten und einer zweiten Flächen-Normalen auf, deren Flächen-Normalen in der Richtung der ersten bzw. zweiten Flächen-Normalen der zueinander winklig angeordneten Querschnittsbereiche des Gebildes aus Halbzeug- Anordnungen verlaufen, die von dem bewegbaren Werkzeugteil angepresst werden, wobei das nicht bewegbare Werkzeugteil die Gegenlage bildet. Bei einer Variante kann das erste Werkzeugteil auch bewegbar gegenüber dem zweiten Werkzeugteil eingerichtet sein. Um Soll-Dicken und eine hohe Qualität des herzustellenden Bauteils zu erreichen, ist erfindungsgemäß vorgesehen, die Werkzeugteile nachzuführen, um aufgrund die durch den ersten Schritt des Press-Vorgang erreichten Halbzeug-Dicken in einem zweiten Schritt aufgrund der Materialkompaktierung auf Soll-Dicken des Halbzeugs H4 zu verringern.

Mit der Verstell-Vorrichtung, die von einer Antriebsvorrichtung angetrieben wird, ist ein Bewegen der Werkzeugteile derart möglich, dass die Werkzeugteile unter Ausübung einer vorbestimmten Druckkraft von auseinander gefahrenen Zuständen in zusammen gefahrene Zustände gebracht werden können, so dass ein Zusammenpressen der zwischen diesen gelegenen Halbzeug-Anordnungen auf vorbestimmte Weise möglich ist. Dadurch kann z.B. auch ein diskontinuierlicher Betrieb realisiert werden, bei dem in einem auseinander gefahrenen Zustand der Werkzeugteile die Halbzeug-Anordnung H4 durch das Press-Vorrichtung 13 gezogen werden kann, und bei in einem zusammen gefahrenen Zustand der Werkzeugteile die Halbzeug-Anordnung H4 gepresst werden kann.

Wenn ein in Längsrichtung des Halbzeug-Anordnung H4 gesehen gekrümmtes gehärtetes Halbzeug bzw. Bauteil hergestellt werden soll, kann das Press-Werkzeug, d.h. dessen Werkzeugteile, vorzugsweise in dessen Längsrichtung L3 gekrümmt ausgebildet sein.

Das Press-Werkzeug ist zum Aufbringen einer Druckkraft vorgesehen, um das eingelegte Halbzeug zu pressen und optional unter Einwirkung einer vorbestimmten Temperatur oder eines vorgegebenen Temperatur-Verlaufs.

Mit der Press-Vorrichtung können FVK-Bauteile mit im Querschnitt winkliger Form und insbesondere Spante eines Flugzeugsrumpfs hergestellt werden.

Das Press-Werkzeugs 13 kann in einem weiteren Ausführungsbeispiel gemäß der Figuren 5a 5b mit Werkzeugteilen gebildet sein, von denen jeweils zwei in entgegengesetzt zueinander verlaufenden Richtungen bewegt werden können. In der Figuren 5a und 5b ist ein Ausführungsbeispiel mit vier Werkzeugteilen 61, 62, 63, 64 dargestellt, von denen die Werkzeugteile 61 und 62 sowie 63 und 64 jeweils entgegengesetzt zueinander bewegt werden können.

Insbesondere kann mit dieser Anordnung ein H-Profil mit zwei parallel zueinander verlaufenden Längsflanschen 71, 72 und einem diese verbindenden mittleren Abschnitt oder Steg 73, die somit zwei gegenüber liegende Ausnehmungen 65, 66 zwischen jeweils einander zugewandten Oberflächen bilden, gepresst werden. Hierzu ist ein erstes und ein zweites Werkzeugteil 61, 62 mittels VerStelleinrichtungen 61 a bzw. 62a entgegengesetzt zueinander in der Richtung R61 bzw. R62 und senkrecht zu der Längsrichtung der Längsflansch-Querschnittsabschnitte 71, 72 und zur Längsrichtung L3 des Press-Werkzeugs linear bewegbar. Mit Bewegungsrichtungen R63 bzw. R64, die im Querschnitt gesehen (Figuren 5a, 5b) senkrecht zur Bewegungsrichtung des ersten und der zweiten Werkzeugteils 61, 62 verläuft, sind ein drittes und ein viertes Werkzeugteil 63 bzw. 64 mittels Versteileinrichtungen 63a bzw. 64a zueinander linear bewegbar, die in die Ausnehmungen 65, 66 einsetzbar sind und die auf beiden Seiten des Stegs und entlang der sich von diesem aus erstreckenden Längsflansch-Querschnittsabschnitte 71, 72 bewegbar sind.

Generell kann das Press-Werkzeug eine Heizvorrichtung aufweisen. In diesem Fall ist vorzugweise ein Temperatursensor mit einer Temperaturüberwachungs-Einrichtung vorgesehen. Durch die Kontrolle der Prozesstemperaturen kann insbesondere die Qualität des herzustellenden Halbzeugs bzw. Bauteils optimiert werden. Insbesondere ist dadurch die Durchführung von reproduzierbaren Testläufen mittels einer gezielten Temperaturüberwachung möglich.

Der Pultrusionsanlage oder -Vorrichtung kann eine Steuerungsvorrichtung zugeordnet sein, mit der Soll-Temperaturen vorgegeben werden können und die eine Regelungsvorrichtung und eine entsprechende Ansteuerung der Heizvorrichtungen aufweist, mit der die Soll-Temperaturen der Heizvorrichtungen vorgegeben und geregelt werden können.

Die Pultrusionsanlage P weist eine Zieh-Vorrichtung 15 zur Zuführung der Halbzeug-Anordnungen in die Verformungs-Vorrichtung 12 auf, die mittels Klemmbacken die Vorschubbewegung V der Halbzeug-Anordnung bewirkt.

## Patentansprüche

1. Pultrusionsverfahren zur Herstellung eines profilierten Preforms oder eines FVK-Bauteils mit zueinander winklig verlaufenden Querschnittsabschnitten aus einer Mehrzahl von Halbzeugen (1,2,3) in einem quasi-kontinuierlichen Prozess, aufweisend die Schritte:
▪ Abgabe von einer Dispenser-Vorrichtung (11) zumindest einer mehrschichtigen Halbzeug-Anordnung (HA) und Zuführung dieser Halbzeug-Anordnung in eine Verformungs-Vorrichtung (12), wobei die mehrschichtige Halbzeug-Anordnung (HA), die von der Dispenser-Vorrichtung (11) abgegeben und der Verformungs-Vorrichtung (12) zugeführt wird, eine Kombination aus mehreren Bahnen von Verstärkungsfaser-Halbzeuglagen (1, 3) und zumindest einem Harzfilm (2) ist, wobei die Halbzeug-Anordnung ein Binderharz mit einem Anteil von maximal 15% am Gesamtgewicht der in der Halbzeug-Anordnung (HA) verwendeten Verstärkungsfaser-Halbzeuglagen als Bindermaterial zur Fixierung der Verstärkungsfaser-Halbzeuglagen (1, 3) aufweist und wobei zumindest zwischen zwei Verstärkungsfaser-Halbzeuglagen (1, 3) zumindest ein Harzfilm (2) gelegen ist;
▪ durch Hindurchführen der Halbzeug-Anordnung durch eine Verformungs-Vorrichtung (12) Anwinkeln zumindest eines Querschnitts-Abschnitts der Halbzeug-Anordnung, so dass die Querschnitts-Abschnitte der Halbzeug-Anordnung ein Winkelprofil bilden;
▪ in einer Press-Vorrichtung (13) durch Zusammenfahren von bewegbaren Werkzeugteilen Pressen der Halbzeug-Anordnung (HA3) in der Querschnittsform, in der diese die Verformungs-Vorrichtung (12) verlässt, und anschließendes Auseinanderfahren der Werkzeugteile, wobei im auseinander gefahrenen Zustand der Werkzeugteile eine Vorschubbewegung der Halbzeug-Anordnung erfolgt und wobei in der Press-Vorrichtung (13) ein Erwärmen der Halbzeug-Anordnung erfolgt, so dass durch das Erwärmen und die gleichzeitige Druckbeaufschlagung ein Verfestigen des Harzmaterials eine formerhaltende Fixierung der Querschnittsabschnitte der Halbzeug-Anordnung zueinander und eine Kompaktierung der Querschnittsabschnitte erfolgt, wobei während des Pressens die Vorschubbewegung der Halbzeug-Anordnung gestoppt wird;
▪ von der Halbzeug-Anordnung (H4) mit den fixierten Lagen Abschneiden eines Längsabschnitts derselben und Entnahme dieses Längsabschnitts als Preform
oder
▪ Härtung der Halbzeug-Anordnung in einem Temperofen, bei der eine Vernetzung des Harzes des Harzfilms zu mindestens 80% vorliegt und von der gehärteten Halbzeug-Anordnung Abschneiden eines Längsabschnitts derselben und Entnahme dieses Längsabschnitts als FVK-Bauteil

2. Pultrusionsverfahren nach Anspruch 1, **dadurch gekennzeichnet, dass** bei dem Pressen in der Press-Vorrichtung (13) in einem ersten Schritt die Werkzeugteile in eine erste Pressposition gefahren und in dieser Pressposition eine vorbestimmte Zeit gehalten werden und in einem zweiten Schritt zur Durchführung eines anschließenden Nachpressens der vorgepressten Halbzeug-Anordnung (H4) die Werkzeugteile in eine zweite Pressposition zueinander gefahren werden, bei der zumindest zwei Werkzeugteile näher zusammengefahren sind als bei der ersten Pressposition.

3. Pultrusionsverfahren nach einem der voranstehenden Ansprüche, **dadurch gekennzeichnet, dass** auf den Preform lokal Verstärkungslagen aus Prepreg aufgelegt werden und anschließend die Kombination des Preforms mit den Verstärkungslagen gehärtet wird oder dass auf den Preform lokal Verstärkungslagen von trockenen Gelegen aufgelegt werden und anschließend die Kombination des Preforms mit den Verstärkungslagen und dem Harzfilm gehärtet wird, wobei zwischen dem Preform und dem nächsten daran angeordneten Gelege ein Harzfilm gelegt wird.

4. Pultrusionsverfahren nach einem der voranstehenden Ansprüche, **dadurch gekennzeichnet, dass** zusätzlich eine Trennfolie auf der in Schwerkraftrichtung gesehen obersten und/oder untersten Oberfläche der Anordnung aus Verstärkungsfaser-Halbzeuglagen (1, 3) gelegen ist, bevor die Halbzeug-Anordnung (HA) in die Verformungs-Vorrichtung (12) eingeführt wird.

5. Pultrusionsverfahren nach einem der voranstehenden Ansprüche 1 bis 4, **dadurch gekennzeichnet, dass** beim Hindurchführen der der Verformungs-Vorrichtung (12) zugeführten Halbzeug-Anordnung (HA1, HB1) durch an dieser anliegende Transportrollen, deren Orientierungen sich in der Längsrichtung der Verformungs-Vorrichtung (12) gesehen von einer Lage im Eingangsbereich (E2) stetig in eine Lage im Ausgangsbereich (A2) der Verformungs-Vorrichtung (12) ändern, die Lage zumindest eines Querschnittsabschnitts der Halbzeug-Anordnung (HA1, HB1) stetig in eine Soll-Winkelstellung geändert wird.

6. Pultrusionsverfahren nach einem der voranstehenden Ansprüche 1 bis 4, **dadurch gekennzeichnet, dass** beim Hindurchführen der der Verformungs-Vorrichtung (12) zugeführten Halbzeug-Anordnung (HA1, HB1) durch einen Verformungskanal mit an dieser anliegenden sich in Längsrichtung der Verformungs-Vorrichtung (12) gesehen kontinuierlich verändernde Verformungskonturen, die Lage zumindest eines Querschnittsabschnitts der Halbzeug-Anordnung (HA1, HB1) stetig in eine Soll-Winkelstellung geändert wird.

7. Pultrusionsverfahren nach einem der voranstehenden Ansprüche, **dadurch gekennzeichnet, dass** bei dem Pressen in der Press-Vorrichtung (13) in einem ersten Schritt die Werkzeugteile in eine erste Pressposition gefahren und in dieser Pressposition eine vorbestimmte Zeit gehalten werden und dass in einem zweiten Schritt zur Durchführung eines anschließenden Nachpressens der vorgepressten Halbzeug-Anordnung (HA4) die Werkzeugteile in eine zweite Pressposition zueinander gefahren werden, bei der zumindest zwei Werkzeugteile näher zusammengefahren sind als bei der ersten Pressposition.

8. Pultrusionsverfahren nach einem der voranstehenden Ansprüche, **dadurch gekennzeichnet, dass** die Verformungs-Vorrichtung (12) Konturflächen aufweist, die derart gestaltet sind, dass beim Hindurchführen der Halbzeug-Anordnung (HA) diese in ihrer Längsrichtung gekrümmt wird.

## Claims

1. A pultrusion method for manufacturing a profiled preform or a fiber-reinforced plastic (FRP) component with cross-sectional segments that extend angularly to one another from a plurality of semifinished products (1, 2, 3) in a quasi-continuous process, wherein said method comprises the steps of:
▪ dispensing from a dispenser unit (11) at least one multilayer semifinished product arrangement (HA) and feeding said semifinished product arrangement into a forming device (12), wherein said multilayer semifinished product arrangement (HA) which is dispensed by said dispenser unit (11) and fed to said forming device (12) is a combination of several webs of semifinished reinforcement fiber layers (1, 3) and at least one resin film (2), wherein the semifinished product arrangement comprises a bind-er resin as binding material for fixing said semifinished reinforcement fiber layers (1, 3), wherein the proportion of said binder resin is at most 15% of the total weight of the semifinished reinforcement fiber layers used in the semifinished product arrangement (HA), and wherein at least one resin film (2) is situated at least between two semifinished reinforcement fiber layers (1, 3);
▪ angling at least one cross-sectional segment of the semifinished product arrangement by guiding the semifinished product arrangement through a forming device (12) such that the cross-sectional segments of the semifinished product arrangement form an angle profile;
▪ compressing the semifinished product arrangement (HA3) in the cross-sectional shape, in which said semifinished product arrangement exits the forming device (12), in a pressing device (13) by moving together movable tool parts and subsequently moving the tool parts apart from one another, wherein a feed movement of the semifinished product arrangement takes place while the tool parts are moved apart from one another, and wherein the semifinished product arrangement is heated in the pressing device (13) such that the heating and the simultaneous pressurization cause curing of the resin material and shape-preserving fixing of the cross-sectional segments of the semifinished product arrangement relative to one another, as well as a compaction of the cross-sectional segments, wherein the feed movement of the semifinished product arrangement is paused during the compression process;
▪ cutting-off a longitudinal section of the semifinished product arrangement (H4) with the fixed layers and removing said longitudinal section as a preform
or
▪ curing the semifinished product arrangement in a tempering furnace such that the resin of the resin film is cross-linked by at least 80% and cutting-off a longitudinal section from the cured semifinished product arrangement and removal of said longitudinal sections as a FRP component part.

2. The pultrusion method according to claim 1, **characterized by** moving the tool parts into a first pressing position and holding the tool parts in said pressing position for a predetermined time in a first step in compressing in the pressing device (13), and moving the tool parts relative to one another into a second pressing position, in which at least two tool parts are moved closer together than in the first pressing position, in a second step for carrying out a subsequent post-compression of the pre-compressed semifinished product arrangement (H4).

3. The pultrusion method according to any one of the preceding claims, **characterized by** placing reinforcement layers of prepreg locally onto the preform and subsequently curing the combination of the preform and the reinforcement layers, or by placing reinforcement layers of dry bonded fabrics locally onto the preform and subsequently curing the combination of the preform with the reinforcement layers and the resin film, wherein a resin film is placed between the preform and the next bonded fabric arranged thereon.

4. The pultrusion method according to any one of the preceding claims, **characterized by** additionally placing a separating foil onto the topmost and/or bottommost surface of the arrangement of semifinished reinforcement fiber layers (1, 3) based on the direction of the gravitational force, before the semifinished product arrangement (HA) is fed into the forming device (12).

5. The pultrusion method according to any one of the preceding claims 1 to 4, **characterized by** a continuous change of the position of at least one cross-sectional segment of the semifinished product arrangement (HA1, HB1) to a nominal angular position, while the semifinished product arrangement (HA1, HB1) fed to the forming device (12) is guided through the forming device, by means of transport rollers that contact the semifinished product arrangement and the orientations of which continuously change in the longitudinal direction of the forming device (12) viewed from a position in the entry region (E2) to a position in the outlet region (A2) of the forming device (12).

6. The pultrusion method according to any one of the preceding claims 1 to 4, **characterized by** continuously changing the position of at least one cross-sectional segment of the semifinished product arrangement (HA1, HB1) to a nominal angular position while the semifinished product arrangement (HA1, HB1) fed to the forming device (12) is guided through the forming device, by means of a forming channel with forming contours that contact the semifinished product arrangement and continuously change in the longitudinal direction of the forming device (12).

7. The pultrusion method according to any one of the preceding claims, **characterized by** moving the tool parts into a first pressing position and holding the tool parts in said pressing position for a predetermined time in a first step in the compression in the pressing device (13), and moving the tool parts relative to one another into a second pressing position, in which at least two tool parts are moved closer together than in the first pressing position, in a second step for carrying out a subsequent post-compression of the pre-compressed semifinished product arrangement (HA4).

8. The pultrusion method according to any one of the preceding claims, **characterized by** the forming device (12) having contour surfaces that are realized in such a way that the semifinished product arrangement (HA) is curved in its longitudinal direction while it is guided through the forming device.

## Revendications

1. Procédé de pultrusion pour produire une préforme profilée ou un composant en matière plastique renforcée par des fibres avec des parties de sections transversales qui s'étendent en angle les unes par rapport aux autres à partir d'une multitude de produits semi-finis (1, 2, 3) dans un processus quasi-continu présentant les étapes :
▪ distribution à partir d'un dispositif de distribution (11) d'au moins un ensemble semi-fini multicouche (HA) et amenée de cet ensemble semi-fini dans un dispositif de déformation (12), l'ensemble semi-fini multicouche (HA) qui est distribué par le dispositif de distribution (11) et amené au dispositif de déformation (12), étant une combinaison de plusieurs bandes de couches semi-finies de fibres de renforcement (1, 3) et d'au moins un film de résine (2), l'ensemble semi-fini présentant une résine de liaison avec une proportion de 15% maximum par rapport au poids total des couches semi-finies de fibres de renforcement utilisées dans l'ensemble semi-fini (HA) comme matériau liant pour la fixation des couches semi-finies de fibres de renforcement (1, 3) et au moins un film de résine (2) étant situé au moins entre deux couches semi-finies de fibres de renforcement (1, 3) ;
▪ pliage d'au moins une partie de section transversale de l'ensemble semi-fini en faisant passer l'ensemble semi-fini par un dispositif de déformation (12) de telle manière que les parties de sections transversales de l'ensemble semi-fini forment un profil coudé ;
▪ pressage de l'ensemble semi-fini (HA3) dans la forme de section transversale dans laquelle celui-ci quitte le dispositif de déformation (12) dans un dispositif de pressage (13) en rassemblant des pièces d'outil mobiles et en séparant ensuite les pièces d'outil, cependant qu'un mouvement d'avancement de l'ensemble semi-fini a lieu lorsque les pièces d'outil sont à l'état écarté et cependant qu'un réchauffement de l'ensemble semi-fini a lieu dans le dispositif de pressage (13) si bien qu'une consolidation du matériau à base de résine, une fixation qui assure le maintien de la forme des parties de section transversale de l'ensemble semi-fini les unes par rapport aux autres grâce au réchauffement et à l'application simultanément de pression et un compactage des parties de sections transversales a lieu, le mouvement d'avancement de l'ensemble semi-fini étant stoppé pendant le pressage ;
▪ découpage d'un tronçon longitudinal de l'ensemble semi-fini (H4) avec les couches fixées et prélèvement de ce tronçon longitudinal en tant que préforme
ou
▪ durcissement de l'ensemble semi-fini dans un four de trempe pendant lequel il y a réticulation de la résine du film de résine pour au moins 80% et découpage d'un tronçon longitudinal de l'ensemble semi-fini durci et prélèvement de ce tronçon longitudinal en tant que composant en matière plastique renforcée par des fibres.

2. Procédé de pultrusion selon la revendication 1, **caractérisé en ce que** lors du pressage dans le dispositif de pressage (13) les pièces d'outil sont amenées dans une première position de pressage dans une première étape et sont maintenues dans cette position de pressage pendant une durée prédéterminée et les pièces d'outil sont amenées dans une seconde position de pressage les unes par rapport aux autres dans une seconde étape pour effectuer un nouveau pressage de l'ensemble semi-fini qui a subi un pressage préliminaire (H4), position pour laquelle au moins deux pièces d'outil sont rapprochées davantage que pour la première position de pressage.

3. Procédé de pultrusion selon l'une des revendications précédentes, **caractérisé en ce que** des couches de renforcement en prépreg sont appliquées localement sur la préforme et la combinaison de la préforme et des couches de renforcement est ensuite durcie ou que des couches de renforcement de nappes sèches sont appliquées localement sur la préforme et la combinaison de la préforme avec les couches de renforcement et le film de résine est ensuite durcie, cependant qu'un film de résine est appliqué entre la préforme et la nappe suivante placée contre celle-ci.

4. Procédé de pultrusion selon l'une des revendications précédentes, **caractérisé en ce qu'**une feuille de séparation est placée en plus sur la surface supérieure et/ou inférieure de l'ensemble de couches semi-finies de fibres de renforcement (1,3), ceci étant vu dans le sens de la gravité, avant que l'ensemble semi-fini (HA) soit introduit dans le dispositif de déformation (12).

5. Procédé de pultrusion selon l'une des revendications précédentes 1 à 4, **caractérisé en ce que** lors de la traversée de l'ensemble semi-fini (HA1, HB1) amené au dispositif de déformation (12) par des galets de transport appliqués à cet ensemble, dont les orientations varient constamment dans une couche dans la zone de sortie (A2) du dispositif de déformation (12), ceci étant vu dans le sens longitudinal du dispositif de déformation (12), la couche d'au moins une partie de section transversale de l'ensemble semi-fini (HA1, HB1) est changée constamment dans une position angulaire nominale.

6. Procédé de pultrusion selon l'une des revendications précédentes 1 à 4, **caractérisé en ce que** lors de la traversée de l'ensemble semi-fini (HA1, HB1) amené au dispositif de déformation (12) par un canal de déformation avec des contours de déformation qui varient continuellement appliqués à cet ensemble, ceci étant vu dans le sens longitudinal du dispositif de déformation (12), la couche d'au moins une partie de section transversale de l'ensemble semi-fini (HA1, HB1) est changée constamment dans une position angulaire nominale.

7. Procédé de pultrusion selon l'une des revendications précédentes, **caractérisé en ce que** lors du pressage dans le dispositif de pressage (13) les pièces d'outil sont déplacées dans une première position de pressage et sont maintenues dans cette position de pressage pendant une durée prédéterminée et que dans une seconde étape pour effectuer un pressage ultérieur consécutif de l'ensemble semi-fini qui a subi un pressage préliminaire les pièces d'outil sont déplacées dans une seconde position de pressage les unes par rapport aux autres pour laquelle au moins deux pièces d'outil sont davantage rapprochées que pour la première position de pressage.

8. Procédé de pultrusion selon l'une des revendications précédentes, **caractérisé en ce que** le dispositif de déformation (12) présente des surfaces de contour qui sont configurées de telle manière que lors de la traversée de l'ensemble semi-fini (HA) celui-ci est courbé dans son sens longitudinal.
